# EUROPÄISCHE PATENTSCHRIFT

(11) **EP 2 920 035 B1**
(45) Veröffentlichungstag und Bekanntmachung des Hinweises auf die Patenterteilung: **09.01.2019**
(21) Anmeldenummer: 13789820.1
(22) Anmeldetag: 15.11.2013
(51) Int. Cl.: B60S 1/10, F01B 9/04

(54) **ELEKTROPNEUMATISCHER SCHEIBENWISCHERANTRIEB FÜR EIN SCHIENENFAHRZEUG, ANTRIEB FÜR EINEN SCHEIBENWISCHER UND PNEUMATIK ZUM BETREIBEN EINES ANTRIEBS FÜR EINEN SCHEIBENWISCHER**
ELECTROPNEUMATIC WINDSHIELD WIPER DRIVE FOR A RAIL VEHICLE, DRIVE FOR A WINDSHIELD WIPER AND PNEUMATIC SYSTEM FOR OPERATING A DRIVE FOR A WINDSHIELD WIPER
ENTRAÎNEMENT D'ESSUIE-GLACE ÉLETROPNEUMATIQUE POUR VÉHICULE FERROVIAIRE, ENTRAÎNEMENT POUR UN ESSUIE-GLACE ET SYSTÈME PNEUMATIQUE DESTINÉ À FAIRE FONCTIONNER UN ENTRAÎNEMENT POUR ESSUIE-GLACE

(30) Priorität: 19.11.2012 DE 102012111127
(43) Veröffentlichungstag der Anmeldung: 23.09.2015
(73) Patentinhaber: KNORR-BREMSE Systeme für Schienenfahrzeuge GmbH, 80809 München (DE)
(72) Erfinder: DE VRIES, Gerhardus, A-2340 Mödling (AT); NOLL, Gerd, A-1170 Wien (AT); MAGLOT, Wolfgang, A-2514 Traiskirchen (AT)
(86) Internationale Anmeldenummer: PCT/EP2013/073898
(87) Internationale Veröffentlichungsnummer: WO 2014/076220

(56) Entgegenhaltungen:
- DE-A1- 2 359 914
- DE-B1- 2 239 006
- DE-C- 491 172
- DE-C2- 4 343 216
- FR-A- 817 653
- US-A- 3 672 260
- DATABASE WPI Week 201022 Thomson Scientific, London, GB; AN 2010-C83738 XP002719648, & CN 2 900 270 Y (ZHOU W) 16. Mai 2007 (2007-05-16)

## Beschreibung

Die vorliegende Erfindung bezieht sich auf einen elektropneumatischen Scheibenwischerantrieb für ein Schienenfahrzeug, eine Pneumatik zum Betreiben des Antriebs, ein Verfahren zum Ansteuern der Pneumatik sowie ein entsprechendes Computer-Programmprodukt.

Auf Hochgeschwindigkeitszügen werden aufgrund der erforderlichen Drehmomente und der zur Verfügung stehenden pneumatischen Druckluft-Versorgung bevorzugt elektropneumatische Scheibenwischerantriebe eingesetzt. Ein bekannter elektropneumatischer Antrieb besteht aus einem Arbeitskolben, einem Steuerkolben und je nach Größe und Ausführung des Antriebes aus einem Dämpferkolben. Der Antrieb führt Wischbewegungen aus, alleine durch das korrekte Anlegen einer Druckluftversorgung. Der Aufbau derartiger Antriebe ist sehr kostenintensiv, da umfangreiche Sonderbauteile erforderlich sind.

Die Patentschrift DE 43 43 216 C2 offenbart einen pneumatischen Scheibenwischerantrieb für Schienenfahrzeuge mit einem Arbeitskolben, einem Steuerkolben, einem druckluftbetätigbaren Sperrkolben zur Blockierung des Steuerkolbens in einer seiner Endstellungen, zwei Sperrkolben zur Blockierung des Arbeitskolbens in einer Zwischenstellung sowie zwei Ventile zur Entlüftung des Drucklufteingangs für den Arbeitskolben und den Steuerkolben bzw. des Drucklufteingangs für den Sperrkolben des Steuerkolbens.

Es ist die Aufgabe der vorliegenden Erfindung eine verbesserte Pneumatik zum Betreiben eines Antriebs für einen Scheibenwischer für ein Schienenfahrzeug, ein Verfahren zum Ansteuern der Pneumatik, eine entsprechende Vorrichtung, ein entsprechendes Computer-Programmprodukt sowie einen elektropneumatischen Scheibenwischerantrieb für ein Schienenfahrzeug zu schaffen.

Diese Aufgabe wird durch eine Pneumatik zum Betreiben eines Antriebs für einen Scheibenwischer für ein Schienenfahrzeug, ein Verfahren zum Ansteuern der Pneumatik, eine entsprechende Vorrichtung, ein entsprechendes Computer-Programmprodukt sowie einen elektropneumatischen Scheibenwischerantrieb für ein Schienenfahrzeug gemäß den unabhängigen Ansprüchen gelöst.

Dieser Erfindung liegt der Gedanke zugrunde, dass ein sicherer und zuverlässiger Betrieb eines Scheibenwischerantriebs dadurch ermöglicht werden kann, dass eine Kolbenführungseinrichtung zum Antreiben eines Scheibenwischers über parallel ausgeführte Normalbetriebsanschlussleitungen und Notbetriebsanschlussleitungen erfolgen kann, die wiederum durch eine entsprechend ausgebildete Pneumatik betrieben werden können. Auch wenn im Normalbetrieb ein Ventil der Pneumatik ausfällt, kann über die zusätzlich vorgesehenen Notbetriebsanschlussleitungen ein zuverlässiger Notbetrieb gewährleistet werden. Dabei ermöglicht der Einsatz von Standardkomponenten für die Pneumatik eine kostengünstige Lösung.

Es wird eine Pneumatik zum Betreiben eines Antriebs für einen Scheibenwischer für ein Schienenfahrzeug vorgestellt, wobei der Antrieb eine Kolbenführungseinrichtung und eine Kraftübertragungseinrichtung aufweist, wobei die Kolbenführungseinrichtung einen ersten Anschluss und einen dem ersten Anschluss gegenüberliegenden zweiten Anschluss und einen in der Kolbenführungseinrichtung angeordneten Kolben aufweist, der ausgebildet ist, einander entgegengesetzte Linearbewegungen entlang der Haupterstreckungsrichtung der Kolbenführungseinrichtung auszuführen, und wobei die Kraftübertragungseinrichtung zum Übertragen der einander entgegengesetzten Linearbewegungen des zumindest einen Kolben auf eine Wischerwelle ausgebildet ist, um eine alternierende Rotationsbewegung der Wischerwelle zu bewirken, und wobei die Pneumatik die folgenden Merkmale aufweist:
eine erste Normalbetriebsanschlussleitung und eine hierzu parallele erste Notbetriebsanschlussleitung, die ausgebildet sind, um einen Versorgungsanschluss für eine Druckluftversorgung der Pneumatik mit dem ersten Anschluss des Antriebs zu verbinden;
eine zweite Normalbetriebsanschlussleitung und eine hierzu parallele zweite Notbetriebsanschlussleitung, die ausgebildet sind, um den Versorgungsanschluss mit dem zweiten Anschluss des Antriebs zu verbinden; und
eine Ventileinrichtung die ausgebildet ist, um in einem Normalbetrieb der Pneumatik den Versorgungsanschluss über die erste Normalbetriebsanschlussleitung mit dem ersten Anschluss und über die zweite Normalbetriebsanschlussleitung mit dem zweiten Anschluss zu koppeln, um die alternierende Rotationsbewegung der Wischerwelle zu bewirken und ausgebildet ist, um in einem Notbetrieb der Pneumatik den Versorgungsanschluss über die erste Notbetriebsanschlussleitung mit dem ersten Anschluss und über die zweite Notbetriebsanschlussleitung mit dem zweiten Anschluss zu koppeln, um die alternierende Rotationsbewegung der Wischerwelle zu bewirken.

Unter einem Schienenfahrzeug kann im Allgemeinen ein spurgebundenes Fahrzeug verstanden werden, wie eine Lokomotive, ein Triebzug, ein Treibwagen, eine Straßenbahn, ein U-Bahnfahrzeug, ein Waggon wie ein Personen- bzw. Reisezug- und/oder Güterwagen. Insbesondere kann es sich bei dem Schienenfahrzeug um ein Hochgeschwindigkeits-Schienenfahrzeug handeln. In einer weiteren Ausführungsform kann der Scheibenwischerantrieb auch für ein Nutzfahrzeug und/oder ein Flurförderzeug verwendet werden. Das Schienenfahrzeug kann zumindest einen elektropneumatischen Scheibenwischerantrieb aufweisen. Unter einer Pneumatik kann eine Vorrichtung verstanden werden, die Druckluft zur Verrichtung von mechanischer Arbeit einsetzt. Die Pneumatik kann einen Antrieb antreiben. Unter einem Antrieb für einen Scheibenwischer kann ein Scheibenwischerantrieb verstanden werden. Der Antrieb kann einen Scheibenwischer bewegen und ausgebildet sein, linear oszillierende Axialbewegungen der Wischerwelle zu bewirken. Unter einer alternierenden Rotationsbewegung kann eine linear oszillierende Axialbewegung einer Welle insbesondere einer Wischerwelle verstanden werden. Unter einem Scheibenwischer kann eine Vorrichtung zum Säubern einer Scheibe insbesondere einer Frontscheibe beispielsweise eines Schienenfahrzeugs verstanden werden. Ein Scheibenwischer kann aus einem Wischerarm, einem Wischerblatt, einer Wischerachse und einem Antrieb bestehen. Die Pneumatik kann an einer Druckluftversorgung angeschlossen sein bzw. mit einer Druckluftversorgung verbunden sein. Die Druckluftversorgung kann einen Luftdruck, beispielsweise in einem Bereich von 7-10 bar bereitstellen. Gemäß einer Ausführungsform kann die Druckluftversorgung einen Luftdruck in einem Toleranzbereich um acht bar bereitstellen. Gemäß einer Ausführungsform kann die Druckluftversorgung einen Luftdruck in einem Toleranzbereich um neun bar bereitstellen. Die Pneumatik kann eine Ventileinrichtung aufweisen. Die Ventileinrichtung kann eine Mehrzahl von miteinander verbundenen Ventilen aufweisen, um eine geforderte Funktionalität der Pneumatik zu realisieren. Der Antrieb kann eine Kolbenführungseinrichtung aufweisen, wobei in der Kolbenführungseinrichtung zumindest ein Kolben der Art angeordnet ist, dass über einströmende Druckluft, die über einen ersten Anschluss an dem einen Ende der Kolbenführungseinrichtung und alternierend hierzu über einen zweiten Anschluss an dem dem einen Ende gegenüberliegenden Ende der Kolbenführungseinrichtung strömt, eine Linearbewegung entlang der Haupterstreckungsrichtung der Kolbenführungseinrichtung erzielt werden kann. Die Kolbenführungseinrichtung kann zylinderförmig oder rohrförmig ausgeführt sein und die Haupterstreckungsrichtung kann einer Längsachse der Kolbenführungseinrichtung entsprechen. Somit wird ein Innenraum der Kolbenführungseinrichtung durch den zumindest einen Kolben in zwei Kammern aufgeteilt. Gemäß einer Ausführungsform können zwei miteinander gekoppelte Kolben eingesetzt werden, wobei ein Kolben dem ersten Anschluss und der andere Kolben dem zweiten Anschluss zugewandt ist. Eine Kraftübertragungseinrichtung zum Übertragen der einander entgegengesetzten Linearbewegungen des zumindest einen Kolben kann eine Rotationsbewegung der Wischerwelle bewirken. Die Pneumatik kann zum Betrieb des Scheibenwischers mit dem ersten Anschluss und dem zweiten Anschluss des Antriebs verbunden sein. Hierbei können eine erste Normalbetriebsanschlussleitung und eine erste Notbetriebsanschlussleitung mit dem ersten Anschluss verbunden sein und eine zweite Normalbetriebsanschlussleitung und eine zweite Notbetriebsanschlussleitung können mit dem zweiten Anschluss verbunden sein. Die Pneumatik kann ausgebildet sein, den Antrieb in zwei unterschiedlichen Betriebsmodi zu betreiben. In einem Normalbetriebsmodus kann der Antrieb mittels der ersten Normalbetriebsanschlussleitung und der zweiten Normalbetriebsanschlussleitung betrieben werden. In einem Notbetriebsmodus Modus kann der Antrieb mittels der ersten Notbetriebsanschlussleitung und der zweiten Notbetriebsanschlussleitung betrieben werden. Die Ventileinrichtung kann demnach ausgebildet sein, um im Normalbetriebsmodus die Notbetriebsanschlussleitungen zu sperren und im Notbetriebsmodus die Normalbetriebsanschlussleitungen zu sperren. Die Ventileinrichtung kann ausgebildet sein, um an dem Versorgungsanschluss der Druckluftversorgung anliegende Druckluft sowohl im Normalbetriebsmodus als auch im Notbetriebsmodus alternierend an den ersten Anschluss und an den zweiten Anschluss zu leiten.

In einer Ausführungsform kann die Ventileinrichtung vier Normalbetriebsventile, zumindest zwei Notbetriebsventile und zumindest ein weiteres Notbetriebsventil aufweisen. Dabei können ein erstes und ein drittes Normalbetriebsventil der vier Normalbetriebsventile und zumindest eines der zumindest zwei Notbetriebsventile der ersten Normalbetriebsanschlussleitung zugeordnet sein. Ein zweites und ein viertes Normalbetriebsventil und zumindest ein weiteres der zumindest zwei Notbetriebsventile können der zweiten Normalbetriebsanschlussleitung zugeordnet sein. Das zumindest eine weitere Notbetriebsventil kann der ersten und der zweiten Notbetriebsanschlussleitung zugeordnet sein.

Unter einem Normalbetriebsventil kann ein 3/2-Wegeventil verstanden werden. Die zumindest zwei Notbetriebsventile können als 3/2-Wegeventil ausgeführt sein. Das weitere Notbetriebsventil kann als ein 5/3-Wegeventil mit Sperr-Nullstellung, Vorwärtsstellung und Rückwärtsstellung verstanden werden. Bei den zumindest zwei Notbetriebsventilen kann in Nullstellung der Durchfluss frei sein. Bei dem dritten Normalbetriebsventil und dem vierten Normalbetriebsventil kann in Nullstellung der Durchfluss frei sein. Bei dem ersten Normalbetriebsventil und dem zweiten Normalbetriebsventil kann in Nullstellung der Zufluss gesperrt sein. Unter einer Nullstellung kann ein Ruhezustand eines Ventils verstanden werden. Ein Normalbetriebsventil kann als ein Ventil mit einer Elektromagnetbetätigung und einer Rückholfeder ausgebildet sein. Ein Notbetriebsventil kann als ein Ventil mit einer Elektromagnetbetätigung und einer Rückholfeder ausgebildet sein. In der Nullstellung kann der Elektromagnet nicht aktiv sein. Die vier Normalbetriebsventile, die zumindest zwei Notbetriebsventile und/oder das zumindest eine weitere Notbetriebsventil können als Magnetventile ausgebildet sein. Durch eine solche Ausführung der Ventile kann ein sicherer Notbetrieb gewährleistet werden.

In der Kolbenführungseinrichtung können zwei Zylinderkammern angeordnet sein. Unter einer Zylinderkammer kann ein Raum verstanden werden, der zwischen einer Innenwand der Kolbenführungseinrichtung, dem Kolben und einem Zylinderdeckel der Kolbenführungseinrichtung gebildet wird. Innerhalb der Zylinderkammer kann sich der Kolben in der Kolbenführungseinrichtung linear bewegen. Die Ventileinrichtung kann aus mehreren Normalbetriebsmagnetventilen bestehen. Hiervon können jeweils zwei Stück der einen Zylinderkammer und die weiteren zwei Stück der anderen Zylinderkammer zugeordnet sein. Eine Zuordnung zu einer Zylinderkammer kann über den ersten Anschluss respektive den zweiten Anschluss erfolgen. Neben diesen Normalbetriebsventilen besitzt das System auch noch mindestens drei weitere Notbetriebsventile, beziehungsweise zumindest zwei Notbetriebsventile und ein weiteres Notbetriebsventil. Das weitere Notbetriebsventil dient der alternativen Aktivierung der Druckluftzufuhr auf eine der beiden Zylinderkammern. Zeitgleich stellt das Ventil auch den Luftabgang der anderen Zylinderkammer her. Beispielsweise kann im Sekundentakt die Druckluftflussrichtung geändert werden. Hierbei kann dann die zuvor belüftete Zylinderkammer mit dem Ausblaskanal verbunden und jenes zuvor an den Ausblaskanal geschaltete Zylinderteil mit Druckluft beflutet werden. Die mindestens zwei weiteren Magnetventile dienen dem gesicherten Abschalten der Zu- und Abluftleitungen der Normalbetriebsventile.

Dem ersten Anschluss und dem zweiten Anschluss kann je zumindest ein Normalbetriebsventil und zumindest ein zu dem zumindest einen Normalbetriebsventil parallel angeordnetes Notbetriebsventil zugeordnet sein, die derart ausgebildet und angeordnet sind, dass eine Zuluft und/oder Abluft an dem zugeordneten Anschluss in einem Normalbetriebsmodus mittels dem je zumindest einen Normalbetriebsventil und gleichzeitig oder alternativ in einem Notbetriebsmodus mittels dem je zumindest einen Notbetriebsventil absperrbar ist, wobei eine zwischen dem ersten Anschluss und dem zweiten Anschluss alternierende Ansteuerung schaltbar ist.

Gemäß einer Ausführungsform kann das erste Normalbetriebsventil, das dritte Normalbetriebsventil und das zumindest eine weitere Notbetriebsventil parallel angeordnet sein und mit dem ersten Anschluss verbunden sein. Das zweite Normalbetriebsventil, das vierte Normalbetriebsventil und das zumindest eine weitere Notbetriebsventil können parallel angeordnet sein und mit dem zweiten Anschluss verbunden sein. Dabei kann das erste Normalbetriebsventil mit einem ersten Notbetriebsventil der zumindest zwei Notbetriebsventile verbunden sein. Das zweite Normalbetriebsventil kann mit einem zweiten Notbetriebsventil der zumindest zwei Notbetriebsventile verbunden sein. Das dritte Normalbetriebsventil kann mit einem dritten Notbetriebsventil der zumindest zwei Notbetriebsventile verbunden sein. Das vierte Normalbetriebsventil kann mit einem vierten Notbetriebsventil der zumindest zwei Notbetriebsventile verbunden sein. Das erste Notbetriebsventil, das zweite Notbetriebsventil und das zumindest eine weitere Notbetriebsventil können mit dem Versorgungsanschluss für die Druckluftversorgung verbunden sein. Der erste Anschluss kann über das dritte Normalbetriebsventil und das dritte Notbetriebsventil und gleichzeitig oder alternativ über das das zumindest eine weitere Notbetriebsventil mit dem Versorgungsanschluss für die Druckluftversorgung verbunden sein.

In einer Ausführungsform kann dem Versorgungsanschluss ein zusätzliches Magnetventil nachgeschaltet sein. In Nullstellung des zusätzlichen Magnetventils kann dem zusätzlichen Magnetventil eine Drossel nachgeschaltet sein. Unter einer Drossel kann ein Drosselventil verstanden werden. Unter einer Drossel kann eine Vorrichtung zur Beschränkung des Durchflusses verstanden werden. Die Drossel kann eine Einschnürung aufweisen. Die Einschnürung der Drossel kann verstellbar sein. Der Durchfluss und gleichzeitig oder alternativ das Druckgefälle an der Drossel können einstellbar sein. Das Magnetventil kann als ein 3/2-Wegeventil ausgebildet sein, wobei ein Eingang mit dem Versorgungsanschluss für die Druckluftversorgung verbunden sein kann. An einem Ausgang des Magnetventils kann die Drossel nachgeschaltet sein kann. Dabei können der Ausgang der Drossel und der zweite Ausgang des Magnetventils miteinander verbunden sein und jeweils ausgebildet sein, um Druckluft für die Pneumatik bereitzustellen.

Entsprechend einer Ausführungsform können die vier Normalbetriebsventile als 3/2-Wegeventile ausgebildet sein und gleichzeitig oder alternativ die zumindest zwei Notbetriebsventile als 3/2-Wegeventile ausgebildet sein und gleichzeitig oder alternativ das weitere Notbetriebsventil als ein 5/3-Wegeventil ausgebildet sein. Dabei können die zumindest zwei Notbetriebsventile ausgebildet sein, dass in Nullstellung der Durchfluss frei ist. Das erste und das zweite Normalbetriebsventil können ausgebildet sein, dass in Nullstellung der Zufluss gesperrt ist und dass das dritte und das vierte Normalbetriebsventil können ausgebildet sein, dass in Nullstellung der Durchfluss frei ist. Das weitere Notbetriebsventil kann eine Sperr-Nullstellung, eine Vorwärtsstellung und eine Rückwärtsstellung aufweisen, wobei der Versorgungsanschluss für die Druckluftversorgung und gleichzeitig oder alternativ ein Abluftanschluss über die zumindest zwei Notbetriebsventile im aktivierten Zustand absperrbar ist.

Vorteilhafterweise ist es möglich, dass die Komplexität der Bauteile sowie die Anzahl der Bauteile auf ein Minimum beschränkt ist. Dabei kann eine Vielzahl von Normbauteilen verwendet werden. Weiterhin kann ein kompakter Bauraum erzielt werden, da im Vergleich zu den bekannten Lösungen kein zusätzlicher Steuerkolben und/oder Dämpferkolben eingesetzt wird. Bei Versagen eines für den Normalbetrieb notwendigen Ventils ist immer eine Steuerung über die Notbetriebsventile möglich. Von Vorteil und kostengünstig ist es, wenn Standardbauteile verwendet werden können und keine umfangreichen Sonderbauteile erforderlich sind.

Es wird ein Antrieb für einen Scheibenwischer für ein Schienenfahrzeug vorgestellt, der die folgenden Merkmale aufweist:
eine Kolbenführungseinrichtung mit einem ersten Anschluss und einem dem ersten Anschluss gegenüberliegenden zweiten Anschluss;
zwei miteinander gekoppelte und in der Kolbenführungseinrichtung angeordnete Kolben, die ausgebildet sind, Linearbewegungen entlang der Haupterstreckungsrichtung der Kolbenführungseinrichtung auszuführen; und
eine Kraftübertragungseinrichtung zum Übertragen der Linearbewegungen der zwei Kolben auf eine Wischerwelle, um eine alternierende Rotationsbewegung der Wischerwelle zu bewirken.

Der Antrieb für einen Scheibenwischer kann auch als ein Scheibenwischerantrieb bezeichnet werden. Die zwei Kolben des Antriebs können sich gemeinsam in der Kolbenführungseinrichtung alternierend hin- und herbewegen, also alternierend einander entgegengesetzte Linearbewegungen ausführen. Dabei können sich die Kolben zuerst gemeinsam in eine Richtung und anschließend gemeinsam in die entgegengesetzte Richtung bewegen. Die Kraftübertragungseinrichtung kann als eine Pleuelstangen-Verbindung zwischen den zwei Kolben ausgebildet sein. Dabei können ein erster der zwei Kolben mittels einer Pleuelstange mit einer Kurbelstange und der zweite Kolben der zwei Kolben mittels einer weiteren Pleuelstange mit der Kurbelstange verbunden sein. Die Kurbelstange kann ausgebildet sein, eine alternierende Rotationsbewegung der Wischerwelle zu bewirken. Die Pleuelstange kann ausgebildet sein, eine Verbindung zwischen der Wischerwelle und Kolben herzustellen. Die Pleuelstange kann eine lineare Bewegung der Kolben in eine kreisförmige Bewegung der Wischerwelle transformieren. Die Pleuelstange kann somit alternierende einander entgegengesetzte Linearbewegungen der zwei Kolben in eine linear oszillierende Axialbewegung der Wischerwelle umsetzen.

Der Antrieb kann durch ein bauteilreduziertes Konzept realisiert werden, bei dem durch Einsatz einer entsprechend ausgeführten Regelelektronik Magnetventile, das heißt Normalbetriebsventile und/oder Notbetriebsventile, derart angesteuert werden, dass sich der Antrieb auf den Arbeitskolben reduziert, und kein Steuer-, wie auch kein Dämpferkolben zusätzlich verwendet wird.

Ein Vorteil des elektropneumatischen Antriebes ist ein Beschränken der Komplexität der Teile, aber auch der Bauteileanzahl auf das absolute Minimum. Es kann auf fertigungstechnisch komplexe Bauteile verzichtet werden und die in großen Stückzahlen als Strangpressprofile bekannten Normzylinder verwendet werden. Ohne einen Steuerkolben und/oder auch einen Dämpferkolben kann Bauraum im Vergleich zu Scheibenwischerantrieben, die diese verwenden, eingespart werden und dieser Raum kann für die Ventileinrichtung benutzt werden. Der Anbau der Ventileinrichtung kann hierbei, neben dem Entfall zusätzlichen Bauraumes, auch den Vorteil kurzer Leitungswege und damit totzeitreduzierten Agierens des Wischerantriebes sicherstellen.

Vorteilhaft kann ein Drehwinkelsensor oder ein von einem Drehwinkelsensor erzeugtes Signal verwendet werden, um die Position des Wischerarms zu erkennen. Ein solcher Drehwinkelsensor, der mit der Wischerwelle oder einem mit der Wischerwelle gekoppelten mechanischen Bauteil gekoppelt ist, bietet den Vorteil, dass die aktuelle Position des Wischerarmes zu jedem Zeitpunkt bekannt sein kann und für die Regelung der Magnetventile in der Normalbetriebsfunktion benutzt werden kann. Es ist damit, neben den Endlagen des Wischerarms, jede beliebige Zwischenstellung einstellbar. So kann ohne Mehraufwand jede Zwischenstellung des Wischerarms realisiert werden, wie z. B. Mittigstellung, Waschstraßenposition oder Rückstellbetrieb.

Vorteilhafterweise kann ein Defekt eines der Normalbetriebsventile nicht zum Versagen des Notbetriebes führen. Bei der vorgeschlagenen Schaltungsausführung mit redundant ausgeführten Leitungen kann auch ein gänzlicher Ausfall der Normalbetriebsventile keine Behinderung der Notbetriebsfunktion darstellen. Durch die mindestens zwei Stück Notbetriebsventile, die eine Funktion als Absperrventile aufweisen können, kann der Druckluftzugang, aber auch der Druckluftabgang der Normalbetriebsventile zuverlässig abgesperrt werden. Die Notbetriebsfunktion kann damit vollständig unabhängig vom Zustand und jeglicher möglichen Störung der Normalbetriebssteuerung arbeiten.

Die Kraftübertragung von den Zylinderkammern kann auf unterschiedliche Art erfolgen. Sowohl die Verwendung der Kombination Zahnstange mit Zahnsegment, aber auch die direkte drehend gelagerte Pleuelstange kann vorgesehen sein. Der Vorteil der drehend gelagerten Pleuelstange gegenüber der erstgenannten Ausführung ist die Reduzierung der Schallentwicklung durch das Abrollen der Zähne bei der Bewegung. Es sind keine Reibflächen vorhanden und damit entfällt auch die Abnützung an den Kontaktflächen beziehungsweise Reibflächen. Im Falle der Pleuelstange wird die Bewegung nicht durch eine Reibung feststehender Kontaktflächen, sondern durch den Kontakt drehend gelagerter Teile und Kontaktstellen realisiert.

Es wird ein Verfahren zum Ansteuern einer Pneumatik zum Betreiben eines Antriebs für einen Scheibenwischer für ein Schienenfahrzeug vorgestellt, wobei das Verfahren die folgenden Schritte aufweist:
Entscheiden, ob die Pneumatik in der Betriebsart des Normalbetriebs oder der Betriebsart des Notbetriebs betrieben wird;
Ansteuern der Ventileinrichtung, sodass ein Versorgungsanschluss für die Druckluftversorgung der Pneumatik über die erste Normalbetriebsanschlussleitung mit dem ersten Anschluss des Antriebs und der zweite Anschluss mit einem Luftausgang gekoppelt sind und alternierend hierzu, dass der Versorgungsanschluss über die zweite Normalbetriebsanschlussleitung mit dem zweiten Anschluss des Antriebs und der erste Anschluss mit einem Luftausgang gekoppelt sind, um die alternierende Rotationsbewegung der von dem Antrieb antreibbaren Wischerwelle zu bewirken, wenn die Pneumatik in der Betriebsart des Normalbetriebs betrieben wird; und
Betätigen der Ventileinrichtung, dass der Versorgungsanschluss über die erste Notbetriebsanschlussleitung mit dem ersten Anschluss und der zweite Anschluss mit einem Luftausgang gekoppelt sind und alternierend hierzu, dass der Anschluss für die Druckluftversorgung über die zweite Notbetriebsanschlussleitung mit dem zweiten Anschluss und der erste Anschluss mit einem Luftausgang gekoppelt ist, um die alternierende Rotationsbewegung der von dem Antrieb antreibbaren Wischerwelle zu bewirken, wenn die Pneumatik in der Betriebsart des Notbetriebs betrieben wird.

Das Verfahren zum Ansteuern einer Pneumatik zum Betreiben eines Antriebs für einen Scheibenwischer oder mit anderen Worten die Regelung des beschriebenen Antriebes kann auf der stetigen Messung der Wischerarmposition und dessen zeitlicher Veränderung basieren. Als Regelungsansatz kann auf das Prinzip eines Fuzzy-Reglers zurückgegriffen werden, in dem die unscharfen Regeln für die Ansteuerung der Normalbetriebsmagnetventile definiert und unter Anwendung der Defuzzifizierung die erforderlichen Ansteuerungen für die Ventile generiert werden können. Damit kann eine laufzeitoptimierte Regelung des Wischerantriebes und des daran montierten Wischerarmes mit dem Wischerblatt möglich sein. Störungen, die im Betrieb auf das System einwirken können, wie z. B. Fahrtgeschwindigkeit, Fahrzeuggegendruck, Benetzung der Scheibe, Veränderungen in der Druckluftversorgung können durch die vorgeschlagene Fuzzy-Regelung sofort bzw. innerhalb weniger Hübe kompensiert werden.

Es wird eine Vorrichtung zum Ansteuern einer Pneumatik zum Betreiben eines Antriebs für einen Scheibenwischer für ein Schienenfahrzeug vorgestellt, wobei die Vorrichtung Einrichtungen aufweist, die ausgebildet sind, ein Verfahren zum Ansteuern der Pneumatik für ein Schienenfahrzeug auszuführen.

Unter einer Vorrichtung kann ein elektrisches Gerät verstanden werden, das Sensorsignale verarbeitet und in Abhängigkeit davon Steuersignale zum Ansteuern der Pneumatik ausgibt. Die Vorrichtung kann eine oder mehrere geeignete Schnittstellen aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.
Es wird ein elektropneumatischer Scheibenwischerantrieb für ein Schienenfahrzeug vorgestellt, der folgende Merkmale aufweist:
einen Antrieb für einen Scheibenwischer für ein Schienenfahrzeug mit einer Kolbenführungseinrichtung und einer Kraftübertragungseinrichtung, wobei die Kolbenführungseinrichtung einen ersten Anschluss und einen dem ersten Anschluss gegenüberliegenden zweiten Anschluss und zumindest einen in der Kolbenführungseinrichtung angeordneten Kolben umfasst, wobei der Kolben ausgebildet ist, einander entgegengesetzte Linearbewegungen entlang der Haupterstreckungsrichtung der Kolbenführungseinrichtung auszuführen, wobei die Kraftübertragungseinrichtung zum Übertragen der einander entgegengesetzten Linearbewegungen des zumindest einen Kolben auf eine Wischerwelle ausgebildet ist, um eine alternierende Rotationsbewegung der Wischerwelle zu bewirken; und
eine Pneumatik zum Betreiben des Antriebs für einen Scheibenwischer für ein Schienenfahrzeug.

Der elektropneumatische Scheibenwischerantrieb kann ferner ein Steuergerät zum Ansteuern der Pneumatik aufweisen. Der elektropneumatische Scheibenwischerantrieb kann, in Abhängigkeit der Pneumatik beziehungsweise des die Pneumatik steuernden Steuergerätes, die Kolbenführungseinrichtung des Antriebs mit Druckluft an den erforderlichen Stellen beaufschlagen und, abhängig von der Druckluftbeaufschlagung, eine Bewegung auf die eine oder die andere Seite durchführen.

Der Antrieb kann eine Kolbenkammer, beziehungsweise eine Kolbenführungseinrichtung und einen frei beweglichen Kolben aufweisen, an dem eine Zahnstange befestigt ist. Die Anordnung aus Kolbenkammer und frei beweglichen Kolben kann auch als Arbeitskolben bezeichnet werden. In die Zahnstange kann ein Zahnsegment eingreifen. Dieses Zahnsegment kann mit der Wischerwelle starr verbunden sein. Eine Bewegung des Kolbens kann damit in einer Drehbewegung der Wischerwelle resultieren.

Der Antrieb kann auch anders ausgeführt sein, beispielsweise unter Verwendung von Pleuelstangen anstelle einer Zahnstange.

In einer Ausführungsform kann sich an der Wischerwelle ein Drehwinkelsensor befinden oder mit dieser wirkverbunden sein, und der Stellungserfassung der Wischerwelle beispielsweise in den beiden Endpositionen und/oder in jeder anderen Position dienen. Die Signale des Drehwinkelsensors können über eine Schnittstelle an das Steuergerät beziehungsweise eine Steuereinheit geleitet werden. Mit den Signalen des Drehwinkelsensors können beispielsweise die Betriebsarten Intervall realisiert werden.

Vorteilhaft ist, dass durch den Einsatz eines Drehwinkelsensors, einer angepassten Pneumatik und einer zugeordneten Steuereinrichtung ein zuverlässiger Betrieb und eine kostengünstige Lösung für einen Scheibenwischerantrieb für ein Schienenfahrzeug geschaffen werden können.

Vorteilhaft kann der vorgestellte elektropneumatische Scheibenwischerantrieb für ein Schienenfahrzeug einen bauteilreduzierten Aufbau und Entfall von Steuerkolben und Dämpferkolben im Vergleich zu bekannten Lösungen bieten. Der Einsatz von Normprofilzylindern aus Strangpressprofilen als Kolbenführungseinrichtung oder Kolbenkammer kann einen Kostenvorteil bieten. In den beiden Seiten der Kolbenführungseinrichtung des Arbeitskolbens können sich Dämpfer, insbesondere Kunststoffdämpfer befinden, die als Anschlagpuffer für die Betriebsart Parken, wie auch zur Bewegungsbegrenzung in der Betriebsart Notbetrieb dienen können. In der Normalbetriebsfunktion kann durch die Regelung ein Anschlagen des Kolbens, beispielsweise eines Zylinderkolbens in die Endlagenpuffer verhindert werden.

Eine Stellungserfassung der Wischerwelle kann mit einem stetigen Drehwinkelsensor, bevorzugt mit Stromschnittstelle, aber nicht auf diese beschränkt, erfolgen. Die Antriebseinheit kann an die Ventileinrichtung direkt montiert sein, ist aber nicht auf diesen Montageort beschränkt. Vorteilhaft kann jedoch die Ventileinrichtung in direkter Nähe zum Antrieb positioniert sein.

Vorteilhaft kann die Verwendung von vier Normalbetriebsventilen für den Zu- und Abgang der beiden Zylinderseiten vorgesehen sein. Durch Verwendung von mindestens zwei Notbetriebsmagnetventilen und einem weiteren Notbetriebsventil können die mindestens zwei Notbetriebsventile die Zu- und Abluft zu den Normalbetriebsventilen absperren. Weiters kann das weitere Notbetriebsventil durch zyklischen Wechsel der Druckluftversorgung auf eine der beiden Zylinderseiten und Verbindung der jeweils anderen Zylinderseite mit dem Luftabgang eine zeitlich bestimmte Wischfunktion als Notbetrieb ohne Einsatz einer Regellogik ermöglichen.

Der elektropneumatische Scheibenwischerantrieb kann die Verwendung eines Steuergerätes vorsehen, welches eine auf Fuzzy-Regeln basierende Logik anwendet, oder eine andere Regel- und Ansteuersignalgenerierung. Eine Regelung der Doppelhubzahl, das ist die Anzahl der Hin- und Herbewegungen des Wischerarmes, kann durch ein weiteres Magnetventil mit nachgeschalteter Drossel erfolgen. Die Doppelhubzahl kann so gesteuert werden, dass ein Verharren des Wischerarmes nach Ausführung eines halben oder vollständigen Doppelwischhubes in der jeweiligen Umkehrposition erfolgt.

Die Kraftübertragung in der Kraftübertragungseinrichtung kann durch eine Zahnstange oder eine Zahnsegment-Verbindung oder durch eine Pleuelstangenausführung ausgebildet sein.

Ein Anschluss der Druckluftversorgungen kann über zentrale Anschlüsse an der Wischerantriebseinheit erfolgen. Ein zentraler Anschluss der Druckluftversorgung kann als ein pneumatischer Anschluss auf der Montageplatte ausgebildet sein, ist aber nicht nur auf diese Lage bzw. Ort beschränkt. Der Anschluss des Druckluftabganges kann an einen zentralen Punkt an der Ventilplatte oder an der Montageplatte positioniert sein, oder der elektropneumatische Scheibenwischerantrieb kann ausgebildet sein, eine direkte Ausblasung über einen Schalldämpfer vorzusehen, wobei der Anschluss des Druckluftabgangs nicht ausschließlich an die beschriebenen Orte beschränkt sein kann.

Die elektrische Versorgung der Magnetventile in der Normal- und auch der Notbetriebsfunktion, sowie des Signals vom Drehwinkelgeber kann an einen Steckverbinder an einem Kabelabgang oder auf der Montageplatte erfolgen, ist aber nicht ausschließlich an die beschriebenen Orte beschränkt.

Gemäß einer Ausführungsform kann der elektropneumatische Scheibenwischerantrieb einen ersten Rohrabschnitt, einen zweiten Rohrabschnitt und ein Mittelmodul umfassen, das zwischen einem ersten Ende des ersten Rohrabschnitts und einem ersten Ende des zweiten Rohrabschnitts angeordnet sein kann. Die dem ersten Ende gegenüberliegende Seite des ersten Rohrabschnitts kann verschlossen sein und kann den ersten Anschluss aufweisen. Die dem zweiten Ende gegenüberliegende Seite des zweiten Rohrabschnitts kann verschlossen sein und kann den zweiten Anschluss aufweisen. Die Rohrabschnitte können jeweils durch Endkappen verschlossen sein, die jeweils eine Schnittstelle für eine pneumatische Leitung aufweisen. Ein erster im ersten Rohrabschnitt angeordneter Kolben und ein zweiter im zweiten Rohrabschnitt angeordneter Kolben können ausgebildet sein, einander entgegengesetzte Linearbewegungen entlang der Haupterstreckungsrichtung der Rohrabschnitte auszuführen. Eine Wischerwelle kann im Mittelmodul angeordnet sein, wobei eine Hauptrotationsachse der Wischerwelle im Wesentlichen senkrecht zur Haupterstreckungsrichtung des ersten und des zweiten Rohrabschnitts ausgerichtet sein kann. Ein Drehwinkelgeber kann mit der Wischerwelle wirkverbunden sein.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines elektropneumatischen Scheibenwischerantriebs für ein Schienenfahrzeug gemäß einem Ausführungsbeispiel der vorliegenden Erfindung; und
- Fig. 2: eine schematische Darstellung eines elektropneumatischen Scheibenwischerantriebs für ein Schienenfahrzeug gemäß einem Ausführungsbeispiel der vorliegenden Erfindung;
- Fig. 3: ein Prinzipbild einer Ventileinrichtung eines elektropneumatischen Scheibenwischerantriebs für ein Schienenfahrzeug gemäß einem Ausführungsbeispiel der vorliegenden Erfindung;
- Fig. 4: ein Prinzipbild einer Ventileinrichtung eines elektropneumatischen Scheibenwischerantriebs für ein Schienenfahrzeug gemäß einem Ausführungsbeispiel der vorliegenden Erfindung;
- Fig. 5: einen Antrieb für einen elektropneumatischen Scheibenwischerantrieb gemäß einem Ausführungsbeispiel der vorliegenden Erfindung;
- Fig. 6: einen Antrieb für einen elektropneumatischen Scheibenwischerantrieb gemäß einem Ausführungsbeispiel der vorliegenden Erfindung;
- Fig. 7: einen Ablaufplan Verfahren zum Ansteuern einer Pneumatik zum Betreiben eines Antriebs für einen Scheibenwischer für ein Schienenfahrzeug gemäß einem Ausführungsbeispiel der vorliegenden Erfindung;
- Fig. 8: ein Diagramm mit Phasen eines Fuzzy-Reglers gemäß einem Ausführungsbeispiel der vorliegenden Erfindung; und
- Fig. 9: ein Ablaufdiagramm von Verfahrensschritten eines Fuzzy-Reglers gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

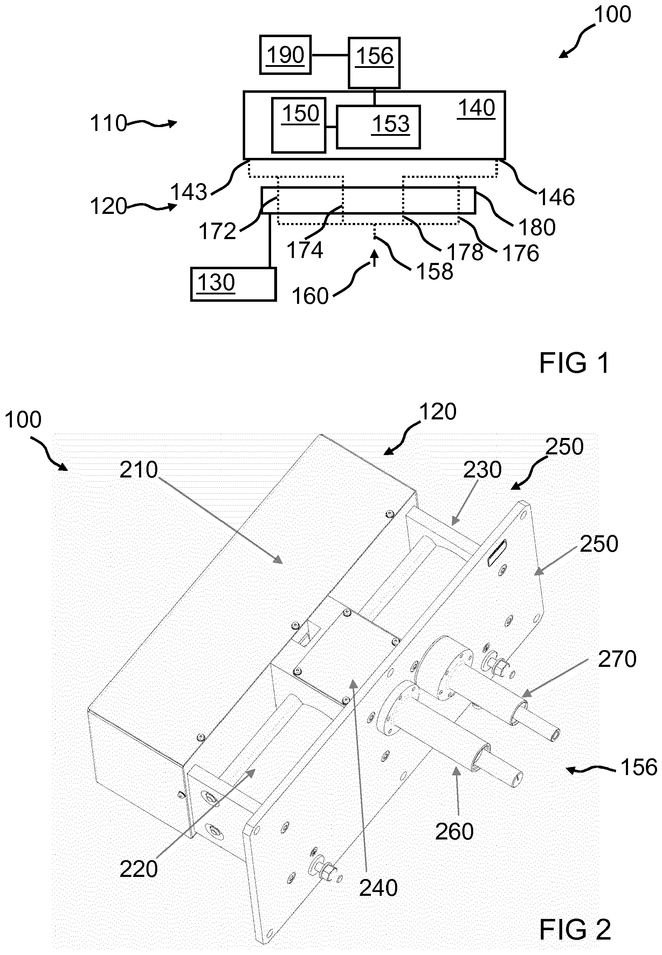

Fig. 1 zeigt eine schematische Darstellung eines elektropneumatischen Scheibenwischerantriebs 100 für ein Schienenfahrzeug gemäß einem Ausführungsbeispiel der vorliegenden Erfindung. Der elektropneumatische Scheibenwischerantrieb 100 umfasst einen Antrieb 110 für einen Scheibenwischer, eine Pneumatik 120 zum Betreiben des Antriebs 110 für den Scheibenwischer sowie ein Steuergerät 130 zum Ansteuern der Pneumatik 120.

Der Antrieb 110 weist eine Kolbenführungseinrichtung 140 mit einem ersten Anschluss 143 und einem zweiten Anschluss 146, zumindest einen Kolben 150, eine mit dem zumindest einen Kolben 150 kraftwirksam verbundene Kraftübertragungseinrichtung 153 sowie eine mit der Kraftübertragungseinrichtung 153 kraftwirksam verbundene Wischerwelle 156 auf. Der Kolben 150 ist ausgebildet, eine Linearbewegung innerhalb der Kolbenführungseinrichtung 140 durchzuführen, wobei die Linearbewegung entlang der Haupterstreckungsrichtung der Kolbenführungseinrichtung 140 verläuft. Der Kolben 150 kann als ein Doppelkolben ausgeführt sein, der zwei einander entgegengesetzt ausgerichtete Kolbenböden aufweist.

Die Pneumatik 120 zum Betreiben des Antriebs 110 für den Scheibenwischer weist einen Versorgungsanschluss 158 für eine Druckluftversorgung 160 auf. Der Versorgungsanschluss 158 ist mittels einer ersten Normalbetriebsanschlussleitung 172 und einer hierzu parallel geführten ersten Notbetriebsanschlussleitung 174 mit dem ersten Anschluss 143 des Antriebs 110 verbunden. Ferner ist der Versorgungsanschluss 158 mittels einer zweiten Normalbetriebsanschlussleitung 176 und einer hierzu parallel geführten zweiten Notbetriebsanschlussleitung 178 mit dem zweiten Anschluss 146 des Antriebs 110 verbunden. Die Anschlussleitungen 172, 174, 176, 178 sind mittels einer Ventileinrichtung 180 versperrbar.

Die Ventileinrichtung 180 ist ausgebildet, sowohl in einem Normalbetrieb als auch in einem Notbetrieb den Antrieb 110 derart mit Druckluft aus der Druckluftversorgung 160 zu versorgen, dass eine alternierende Rotationsbewegung der Wischerwelle 156 erzielt wird.

Hierzu wird in einem ersten Schritt der erste Anschluss 143 mit Druckluft gekoppelt, sodass der zumindest eine Kolben 150 eine Linearbewegung von dem ersten Anschluss 143 in Richtung des zweiten Anschlusses 146 durchführt. Hierzu wird die (Druck-)Luft an dem zweiten Anschluss 146 zu einem Luftauslass geleitet und abgelassen. In einem folgenden Schritt wird der zweite Anschluss 146 mit Druckluft gekoppelt, sodass der zumindest eine Kolben 150 eine Linearbewegung von dem zweiten Anschluss 146 in Richtung des ersten Anschlusses 143 durchführt. Hierzu wird die (Druck-)Luft an dem ersten Anschluss 143 zu einem Luftauslass geleitet und abgelassen. Die Ventileinrichtung 180 ist ausgebildet, im Normalbetrieb die Druckluft über die erste Normalbetriebsanschlussleitung 172 respektive zweite Normalbetriebsanschlussleitung 176 zu leiten. Die Ventileinrichtung 180 ist weiterhin ausgebildet, im Notbetrieb die erste Normalbetriebsanschlussleitung 172 respektive zweite Normalbetriebsanschlussleitung 176 zu blocken und die Ansteuerung des Antriebs 110 mittels der ersten Notbetriebsanschlussleitung 174 respektive der zweiten Notbetriebsanschlussleitung 178 zu realisieren.

Der elektropneumatische Scheibenwischerantrieb 100 weist weiterhin einen Drehwinkelsensor 190 auf, der mit der Wischerachse 156 wirkverbunden ist. Der Drehwinkelsensor 190 ist ausgebildet, einen Drehwinkel der Wischerachse 156 dem Steuergerät 130 zum Ansteuern der Pneumatik 120 bereitzustellen.

Das Steuergerät 130 ist ausgebildet, um die Pneumatik 120 zum Betreiben eines Antriebs 110 für einen Scheibenwischer für ein Schienenfahrzeug zu steuern. Das Steuergerät kann ausgebildet sein, zwei Betriebsmodi - Normalbetrieb und Notbetrieb - zu unterstützen. Das Steuergerät 130 weist eine Schnittstelle auf, die ausgebildet ist, zumindest ein Signal eines Drehwinkelsensors 190 zu empfangen. Das Steuergerät 130 weist eine Schnittstelle auf, die ausgebildet ist, Steuersignale zum Ansteuern der Pneumatik 120 auszugeben. Weiterhin weist das Steuergerät 130 Einrichtungen auf, um ein Verfahren zum Ansteuern der Pneumatik 120, auszuführen. Im Normalbetrieb stellt das Steuergerät 130 an der Schnittstelle zum Ansteuern der Pneumatik entsprechende Steuersignale bereit. Die Steuersignale können ausgebildet sein, einen an Umgebungsbedingungen angepassten Betrieb des Antriebs für einen Scheibenwischer zu ermöglichen.

Fig. 2 zeigt eine schematische Darstellung eines elektropneumatischen Scheibenwischerantriebs 100 für ein Schienenfahrzeug gemäß einem Ausführungsbeispiel der vorliegenden Erfindung. Der elektropneumatische Scheibenwischerantrieb 100 kann dem bereits in Fig. 1 gezeigten elektropneumatischen Scheibenwischerantrieb entsprechen. Die Pneumatik 120 ist unter einer Abdeckung 210 für die Pneumatik 120 verborgen. Der Antrieb 110 weist als Kolbenführungseinrichtung ein Zylinderrohr 220 aus Strangpressprofil auf, dessen zwei Enden - am Ende des Zylinderrohrs 220 in seiner Haupterstreckungsrichtung - mit je einem Zylinderdeckel 230 verschlossen sind. Das Zylinderrohr 220 weist in einem Mittelbereich ein Mittelmodul 240 auf. Die Zylinderdeckel 230 sowie das Mittelmodul 240 sind mit einer Montageplatte 250 verschraubt, welche parallel zur Haupterstreckungsrichtung des Zylinderrohrs 220 angeordnet ist. Senkrecht zur Montageplatte 250 ist eine Hauptarmwelle 260 und eine hierzu parallel angeordnete Parallelarmwelle 270 angeordnet. Die Hauptarmwelle 260 entspricht der Wischerwelle 156 aus Fig. 1. Die Parallelarmwelle 270 stellt eine optionale Ausgestaltung eines Ausführungsbeispiels mit einer zweiten Wischerwelle dar.

Mit anderen Worten zeigt das Ausführungsbeispiel in Fig. 2 einen modular aufgebauten Arbeitskolben, der aus einem speziell gefertigten Modul besteht, das die Wischerwelle aufnimmt. An dieses Mittelmodul sind Normzylinder angebaut, in denen die Kolben ihre Bewegung ausführen können. Auf der Wischerwelle oder auch auf einer allfälligen Parallelarmwelle befindet sich ein hier nicht dargestellter Drehwinkelgeber beziehungsweise Drehwinkelsensor. Der Drehwinkelgeber liefert in Abhängigkeit der Wischerarmstellung bzw. der Wischerwelle oder Parallelarmwelle ein, dem aktuellen Positionswinkel proportionales Signal. Dieses kann bevorzugt als Stromsignal von 4 -20 mA ausgeführt sein, könnte aber auch ein Spannungssignal von z. B. 0 -10 V sein. Am Antrieb befindet sich weiters, auf einer eigenen Montageplatte, die Ventileinheit. Die Lage dieser Ventileinheit ist bevorzugt in unmittelbarer Nähe zum Arbeitskolben, aber nicht auf diesen Montageort alleinig beschränkt.

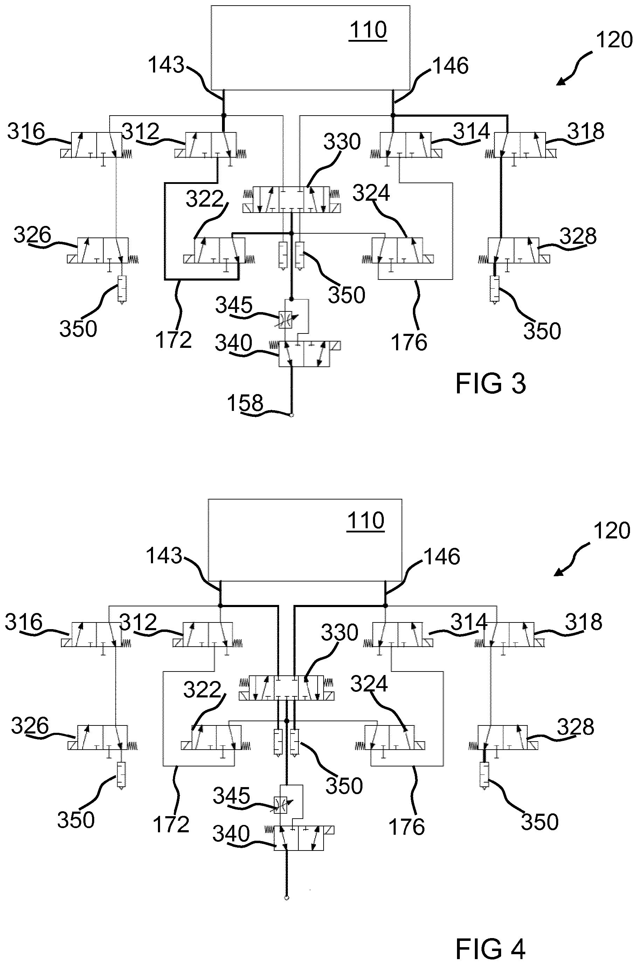

Fig. 3 zeigt ein Prinzipbild einer Ventileinrichtung 120 eines elektropneumatischen Scheibenwischerantriebs für ein Schienenfahrzeug gemäß einem Ausführungsbeispiel der vorliegenden Erfindung. Bei dem elektropneumatischen Scheibenwischerantrieb kann es sich um den in Fig. 1 gezeigten elektropneumatischen Scheibenwischerantrieb mit einer Ventileinrichtung 120 handeln. Die Ventileinrichtung 120 weist ein erstes Normalbetriebsventil 312, ein zweites Normalbetriebsventil 314, ein drittes Normalbetriebsventil 316 sowie ein viertes Normalbetriebsventil 318, ein erstes Notbetriebsventil 322, ein zweites Notbetriebsventil 324, ein drittes Notbetriebsventil 326 sowie ein viertes Notbetriebsventil 328, ein weiteres Notbetriebsventil 330, ein zusätzliches Magnetventil 340 sowie eine dem zusätzlichen Magnetventil nachgeschaltete Drossel 345 auf. Bei allen aufgeführten Ventilen 312, 314, 316, 318, 322, 324, 326, 328, 330, 340 handelt es sich in dem gezeigten Ausführungsbeispiel um Ventile mit Elektromagnetbetätigung und Rückholfeder. Bei dem weiteren Notbetriebsventil 330 handelt es sich um ein 5/3-Wegeventil mit Sperr-Nullstellung, Vorwärts-und Rückwärtsstellung; bei allen anderen aufgeführten Ventilen 312, 314, 316, 318, 322, 324, 326, 328, 340 handelt es sich um 3/2-Wegeventile. Bei dem ersten Normalbetriebsventil 312 und dem zweiten Normalbetriebsventil 314 ist in Nullstellung der Zufluss gesperrt. Bei dem dritten Normalbetriebsventil 316 und dem vierten Normalbetriebsventil 318 ist in Nullstellung der Durchfluss frei. Bei den zumindest zwei Notbetriebsventilen 322, 324, 326, 328 ist in Nullstellung der Durchfluss frei.

Das erste Normalbetriebsventil 312, das dritte Normalbetriebsventil 316 sowie das weitere Notbetriebsventil 330 sind mit dem ersten Anschluss 143 des Antriebs 110 verbunden. Das zweite Normalbetriebsventil 314, das vierte Normalbetriebsventil 318 sowie das weitere Notbetriebsventil 330 sind mit dem ersten Anschluss 143 des Antriebs 110 verbunden. Das erste Normalbetriebsventil 312 ist mit dem ersten Notbetriebsventil 322 verbunden. Das zweite Normalbetriebsventil 314 ist mit dem zweiten Notbetriebsventil 324 verbunden. Das dritte Normalbetriebsventil 316 ist mit dem dritten Notbetriebsventil 326 verbunden. Das vierte Normalbetriebsventil 318 ist mit dem vierten Notbetriebsventil 328 verbunden. Das zusätzliche Magnetventil 340 ist mit dem Versorgungsanschluss 158 für die Druckluftversorgung verbunden. In Nullstellung des zusätzlichen Magnetventils 340 ist dem zusätzlichen Magnetventil 340 eine Drossel 345 nachgeschaltet. Ein Ausgang der Drossel 345 und ein Ausgang des zusätzlichen Magnetventils 340 im aktivierten Zustand sind mit dem ersten Notbetriebsventil 322 dem zweiten Notbetriebsventil 324 sowie dem weiteren Notbetriebsventil 330 verbunden. Das dritte Notbetriebsventil 326 und das vierte Notbetriebsventil 328 sind jeweils mit einem Schalldämpfer 350 verbunden. Das weitere Notbetriebsventil 330 ist mit zwei Schalldämpfern 350 verbunden. In einem weiteren nicht gezeigten Ausführungsbeispiel sind die zu den Schalldämpfer 350 führenden Ausgänge des dritten Notbetriebsventils 326, des vierten Notbetriebsventils 328 sowie des weiteren Notbetriebsventils 330 miteinander und mit einem Schalldämpfer 350 verbunden. Der Schalldämpfer ist als ein Luftausgang ausgebildet.

In Fig. 3 sind die Druckluft führenden Leitungen, das heißt die erste Normalbetriebsanschlussleitung 172 sowie eine Normalbetriebsabluftleitung 362 hervorgehoben. Für den gezeigten Betriebszustand, bei dem der zumindest eine Kolben beziehungsweise die Kraftübertragungseinrichtung von dem ersten Anschluss 143 in Richtung des zweiten Anschlusses 146 bewegt werden soll, sind das erste Normalbetriebsventil 312 sowie das dritte Normalbetriebsventil 316 aktiv. In dem gezeigten Betriebszustand wird die am zusätzlichen Magnetventil 340 vom Anschluss für die Druckluftversorgung anliegende Druckluft über die Drossel 345, das erste Notbetriebsventil 322 und das erste Normalbetriebsventil 312 zum ersten Anschluss 143 geleitet. Gleichzeitig strömt am zweiten Anschluss 146 die Druckluft über das für Durchfluss freie vierte Normalbetriebsventil 318, das vierte Notbetriebsventil 328 sowie den Schalldämpfer 350 aus. Alle anderen Leitungswege sind gesperrt.

Um eine hiervon entgegengesetzte Bewegungsrichtung des zumindest einen Kolben zu erzielen, das heißt der zumindest eine Kolben beziehungsweise die Kraftübertragungseinrichtung soll von dem zweiten Anschluss 146 in Richtung des ersten Anschlusses 143 bewegt werden, sind das zweite Normalbetriebsventil 314 sowie das vierte Normalbetriebsventil 318 aktiv. Die am Anschluss für die Druckluftversorgung anliegende Druckluft strömt dann über das zusätzliche Magnetventil 340, das zweite Notbetriebsventil 324 und das zweite Normalbetriebsventil 314 zu dem zweiten Anschluss 146 und gleichzeitig kann die Luft am ersten Anschluss 143 über das dritte Normalbetriebsventil 316 und das dritte Notbetriebsventil 326 und einen Schalldämpfer 350 ausströmen.

In einem weiteren nicht gezeigten Ausführungsbeispiel können die in dem in Fig. 3 dargestellten vier Notbetriebsventile 322, 324, 326, 328 durch nur zwei Notbetriebsventile ersetzt werden. In diesem Fall würde das erste der nur zwei Notbetriebsventile zwischen dem ersten Anschluss 143 und dem ersten Normalbetriebsventil 312 sowie dem dritten Normalbetriebsventil 316 angeordnet sein, wobei das weitere Notbetriebsventil 330 weiterhin direkt mit dem ersten Anschluss 143 verbunden ist. Analog hierzu würde das zweite der nur zwei Notbetriebsventile zwischen dem zweiten Anschluss 146 und dem zweiten Normalbetriebsventil 314 sowie dem vierten Normalbetriebsventil 318 angeordnet sein, wobei das weitere Notbetriebsventil 330 weiterhin direkt mit dem zweiten Anschluss 146 verbunden ist. Diese Anordnung erlaubt in einem Notbetrieb die Luftzufuhr und Luftabfuhr über die Normalbetriebsventile 312, 314, 316, 318, ebenso wie in dem in Fig. 3 dargestellten Ausführungsbeispiel, zu unterbrechen, sodass im Notbetrieb eine Ansteuerung über das weitere Notbetriebsventil 330 unabhängig von der Stellung der Normalbetriebsventile 312, 314, 316, 318 ermöglicht wird. Die Notbetriebsfunktion der Fig. 3 gezeigten pneumatischen Ansteuerung wird in der folgenden Fig. 4 dargestellt.

Fig. 4 zeigt ein Prinzipbild einer Ventileinrichtung 120 eines elektropneumatischen Scheibenwischerantriebs für ein Schienenfahrzeug gemäß einem Ausführungsbeispiel der vorliegenden Erfindung. Die Darstellung entspricht weitgehend dem in Fig. 3 gezeigten Prinzipbild mit dem Unterschied, dass eine Notbetriebsfunktion dargestellt ist. Die vier Notbetriebsventile 322, 324, 326, 328 sind aktiv. Die beiden möglichen Schaltstellungen des als 5/3-Wegeventil ausgeführten weiteren Notbetriebsventils 330 werden zeitgesteuert alternativ aktiviert. Der Schaltzustand der vier Normalbetriebsventile 312, 314, 316, 318 ist in diesem Fall irrelevant. Im Nullzustand des weiteren Notbetriebsventils 330 findet keine Änderung des Luftdrucks am ersten Anschluss 143 und/oder zweiten Anschluss 146 statt. Je nach aktivierter Schaltstellung des weiteren Notbetriebsventils 330 liegt der Luftdruck der über das zusätzliche Magnetventil 340 und das weitere Notbetriebsventil 330 hereinströmenden Luft am ersten Anschluss 143 an und die Luft am zweiten Anschluss 146 kann über das weitere Notbetriebsventil 330 und den Schalldämpfer 350 ausströmen, oder umgekehrt, d. h. der Luftdruck der über das zusätzliche Magnetventil 340 und das weitere Notbetriebsventil 330 hereinströmenden Luft liegt am zweiten Anschluss 146 an und die Luft am ersten Anschluss 143 kann über das weitere Notbetriebsventil 330 und den Schalldämpfer 350 ausströmen.

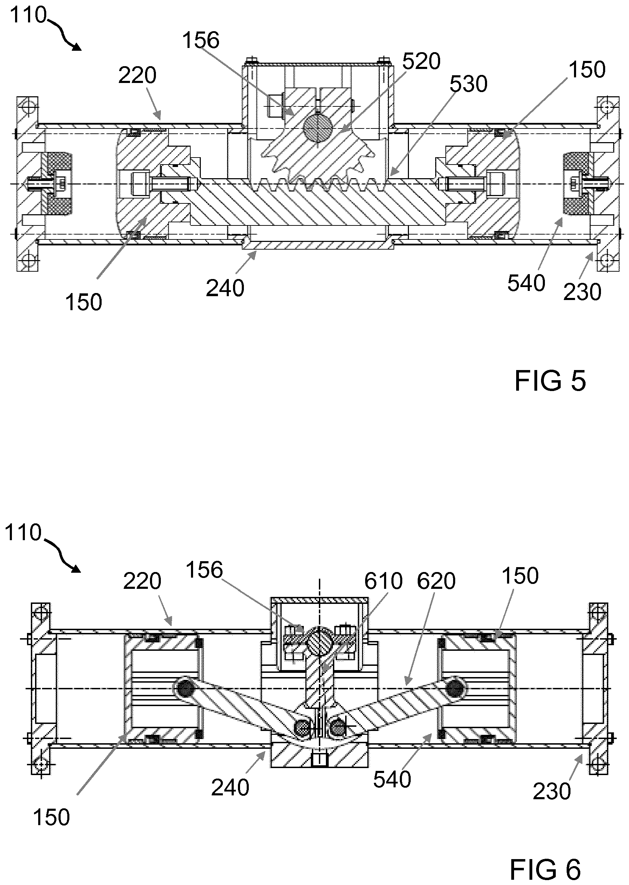

Fig. 5 zeigt einen Antrieb 110 für einen elektropneumatischen Scheibenwischerantrieb gemäß einem Ausführungsbeispiel der vorliegenden Erfindung. An einem Mittelmodul 510 ist an zwei gegenüberliegenden Seiten je ein Zylinderrohr 220 aus Strangpressprofil angeordnet. Das Zylinderrohr 220 ist an der dem Mittelmodul 240 gegenüberliegenden Seite mit einem Zylinderdeckel 230 abgedichtet, wobei die zwei Zylinderdeckel pneumatische Zuleitungen, das heißt, den ersten Anschluss in dem ersten Zylinderdeckel 230 und den zweiten Anschluss in dem zweiten Zylinderdeckel 230, aufweisen. Im Mittelmodul 240 ist eine Wischwelle 156 angeordnet. Die Wischwelle 156 steht senkrecht auf einer durch die Achse beziehungsweise der Haupterstreckungsrichtung des Zylinderrohrs 220 verlaufenden Hilfsebene. Die Wischerwelle 156 ist kraft- und/oder formschlüssig mit einem Zahnsegment 520 verbunden. Das Zahnsegment 520 ist im Eingriff mit einer Zahnstange 530, welche zwischen zwei in dem Zylinderrohr angeordneten Kolben 150 angeordnet ist. Ein Ende der Zahnstange 530 ist mit einer Schraubverbindung mit dem ersten Kolben 150 der zwei Kolben 150 und das hierzu gegenüberliegende Ende der Zahnstange ist mit einer Schraubverbindung mit einem zweiten Kolben 150 der zwei Kolben 150 verbunden. Dichtungsringe zwischen den Kolben 150 und dem Zylinderrohr 220 dichten den Raum zwischen den Kolben 150 und dem jeweils zugeordneten Zylinderdeckel 230 gegenüber dem Mittelmodul 240 fluiddicht ab. Eine Linearbewegung der Kolben 150 und der mit den Kolben 150 verbundenen Zahnstange 530 wird über das mit der Zahnstange 530 im Eingriff stehende Zahnsegment 520 in eine Rotationsbewegung der Wischerwelle 156 umgesetzt. Auf der dem Zylinderrohr 220 zugewandten Seite des Zylinderdeckels 230 ist je ein Endlagendämpfer 540 angeordnet. Eine Einheit aus Kolben 150, Zahnstange 530 und Zahnsegment 520 kann als Kraftübertragungseinrichtung, welche in Fig. 1 mit dem Bezugszeichen 153 versehen ist, bezeichnet werden. Ein Ausführungsbeispiel mit einer hiervon verschiedenen Kraftübertragungseinrichtung wird in Fig. 6 dargestellt.

Fig. 6 zeigt einen Antrieb 110 für einen elektropneumatischen Scheibenwischerantrieb gemäß einem Ausführungsbeispiel der vorliegenden Erfindung. Der in Fig. 6 gezeigte Antrieb 110 für einen elektropneumatischen Scheibenwischerantrieb entspricht weitgehend dem in Fig. 5 gezeigten Antrieb 110, unterscheidet sich jedoch in der Ausführung der Kraftübertragungseinrichtung. Die Kraftübertragungseinrichtung wird mittels einer kraft- und/oder formschlüssig mit der Wischerachse 156 verbundenen Kurbelstange realisiert, welche mit einer Pleuelstange 620 mit je einem Kolben 150 wirkverbunden ist. In diesem Ausführungsbeispiel weisen die Kolben 150 jeweils einen Endlagendämpfer 540 für die Pleuelstange 620 auf. Die Pleuelstange 620 ist die Verbindung zwischen der Wischerwelle 156 und dem sich in hin- und hergehender Bewegung befindlichen Kolben 150. Die Pleuelstange 620 setzt die lineare Bewegung der Kolben 150 in die kreisförmige Bewegung der Wischerwelle 156, das heißt in eine linear oszillierende Axialbewegung der Wischerwelle 156 um.

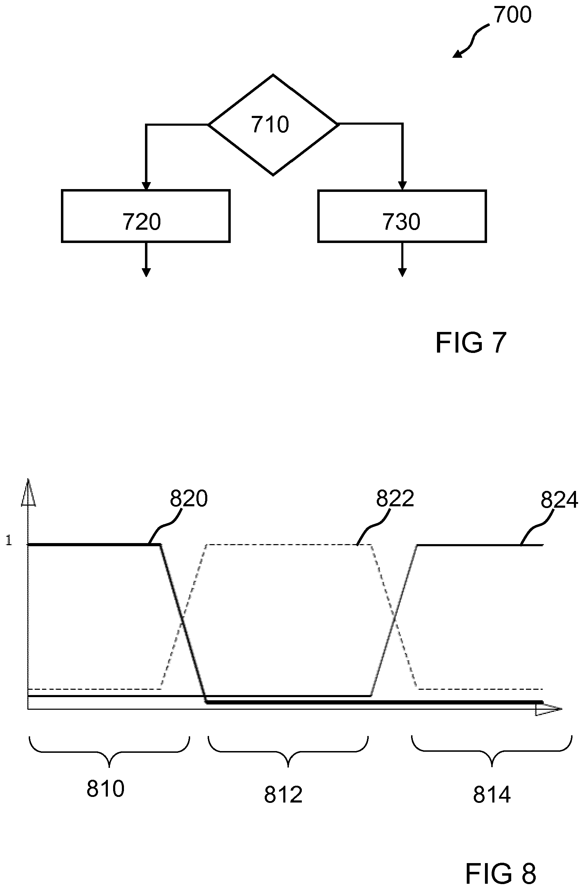

Fig. 7 zeigt einen Ablaufplan eines Verfahrens 700 zum Ansteuern einer Pneumatik zum Betreiben eines Antriebs für einen Scheibenwischer für ein Schienenfahrzeug gemäß einem Ausführungsbeispiel der vorliegenden Erfindung. Bei dem Antrieb kann es sich um den in Fig 1 und/oder Fig. 2 gezeigten Antrieb für einen Scheibenwischer für ein Schienenfahrzeug handeln. Bei der Pneumatik kann es sich um eine in Fig. 1 als Ventileinrichtung skizzierte Pneumatik und/oder um das in Fig. 3 gezeigte Ausführungsbeispiel handeln. Das Verfahren weist drei Schritte 710, 720, 730 auf. Das Verfahren 700 kann von geeigneten Einrichtungen eines Steuergeräts umgesetzt werden, wie es anhand von Fig. 1 beschrieben ist.

In einem Schritt 710 des Entscheidens über die Betriebsart der Pneumatik wird zwischen einem Normalbetrieb und einem Notbetrieb entschieden. Wenn ein Normalbetriebsventil der vier Normalbetriebsventile nicht ordnungsgemäß arbeitet, kann der Notbetrieb gewählt werden. Auch ein Eingriff eines Bedieners kann zur Auswahl des Betriebsmodus Notbetrieb führen. Eine nicht normale Funktion des Antriebs kann zur Entscheidung für den Notbetrieb führen.

Wenn die Betriebsart Normalbetrieb im Schritt 710 des Entscheidens gewählt wurde, so wird der Schritt 720 des Ansteuerns der Ventileinrichtung ausgeführt. Durch Ausführen des Schritts 720 wird der Versorgungsanschluss für die Druckluftversorgung über die erste Normalbetriebsanschlussleitung mit dem ersten Anschluss gekoppelt und der zweite Anschluss wird mit einem Luftausgang gekoppelt. Alternierend hierzu wird der Anschluss für die Druckluftversorgung über die zweite Normalbetriebsanschlussleitung mit dem zweiten Anschluss gekoppelt und der erste Anschluss mit einem Luftausgang, um die alternierende Rotationsbewegung der Wischerwelle zu bewirken. Im Schritt 720 des Ansteuerns können auch weitere Modi umgesetzt sein, wie ein Intervallbetrieb oder Fahren der Wischerblätter in eine Waschstraßenposition.

Wenn die Betriebsart Notbetrieb im Schritt 710 des Entscheidens gewählt wurde, so wird der Schritt 730 des Betätigens der Ventileinrichtung ausgeführt. Durch Ausführen des Schritts 730 wird der Versorgungsanschluss der Druckluftversorgung über die erste Notbetriebsanschlussleitung mit dem ersten Anschluss und der zweite Anschluss mit einem Luftausgang gekoppelt. Alternierend hierzu wird der Versorgungsanschluss für die Druckluftversorgung über die zweite Notbetriebsanschlussieitung mit dem zweiten Anschluss und der erste Anschluss mit einem Luftausgang gekoppelt, um die alternierende Rotationsbewegung der Wischerwelle zu bewirken.

Fig. 8 zeigt ein Diagramm mit Phasen eines Fuzzy-Reglers gemäß einem Ausführungsbeispiel der vorliegenden Erfindung. In einem kartesischen Koordinatensystem ist auf der Abszisse ein Wischwinkel und auf der Ordinate der Ventilzustand, das heißt Nullzustand/Ruhezustand oder aktiv, dargestellt. Das Diagramm zeigt drei Phasen 810, 812, 814 und den Schaltzustand von drei Normalbetriebsventilen. Bei den Normalbetriebsventilen kann es sich um das in Fig. 3 gezeigte erste Normalbetriebsventil 312, repräsentiert durch den ersten Graphen 820, das zweite Normalbetriebsventil 314, repräsentiert durch den zweiten Graphen 822, und dritte Normalbetriebsventil 316, repräsentiert durch den dritten Graphen 824, handeln. In der ersten Phase 810 zeigt der erste Graph 820 einen aktiven Betriebszustand, der zweite Graph 822 und der dritte Graph 824 zeigen einen Ruhezustand. Im Übergang von der ersten Phase 810 zu der zweiten Phase 812 zeigen der erste Graph 820 einen Übergang von dem aktiven Betriebszustand in einen Ruhezustand und der zweite Graph 822 einen Übergang von dem Ruhezustand in einen aktiven Betriebszustand. In der zweiten Phase 812 zeigt der zweite Graph 822 einen aktiven Betriebszustand, der erste Graph 820 und der dritte Graph 824 zeigen einen Ruhezustand. Im Übergang von der zweiten Phase 812 zu der dritten Phase 814 zeigen der zweite Graph 822 einen Übergang von dem aktiven Betriebszustand in einen Ruhezustand und der dritte Graph 824 einen Übergang von dem Ruhezustand in einen aktiven Betriebszustand. In der dritten Phase 814 zeigt der dritte Graph 824 einen aktiven Betriebszustand, der erste Graph 820 und der zweite Graph 822 zeigen einen Ruhezustand.

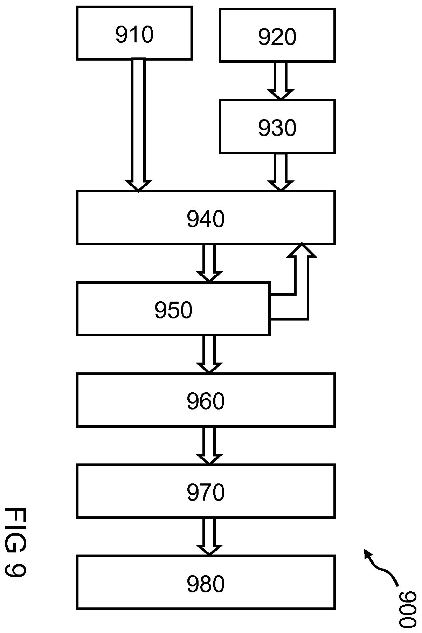

Fig. 9 zeigt ein Ablaufdiagramm von Verfahrensschritten eines Fuzzy-Reglers gemäß einem Ausführungsbeispiel der vorliegenden Erfindung. In einem Schritt 910 wird der Betriebsmodus festgelegt. Parallel hierzu wird in einem Schritt 920 zumindest ein Stellungswinkel der Wischerwelle erfasst. Der in Schritt 920 zumindest eine erfasste Stellungswinkel wird in einem Schritt 930 einer Filterung und Wandlung unterzogen. Der Schritt 940 der Fuzzifizierung erhält das Ergebnis von Schritt 910 der Betriebsmodusauswahl und Schritt 930 der Filterung und Wandlung und gibt sein Ergebnis an einen Schritt 950 der Laufzeitoptimierung. Das Ergebnis des Schrittes 950 der Laufzeitoptimierung geht als Feedback zurück an den Schritt 940 der Fuzzifizierung sowie an einen Schritt 960 der Defuzzifizierung. In dem darauf folgenden Schritt 970 der Störungsverarbeitung werden eventuelle Störungen verarbeitet und das Ergebnis an den Schritt 980 der Aktivierung der Ventile beziehungsweise bereitstellen eines Prozessabbildes geleitet.

Die beschriebenen Ausführungsbeispiele sind nur beispielhaft gewählt und können miteinander kombiniert werden.

### Bezugszeichenliste

- 100: elektropneumatischer Scheibenwischerantrieb
- 110: Antrieb
- 120: Pneumatik
- 130: Steuergerät
- 140: Kolbenführungseinrichtung
- 143: erster Anschluss
- 146: zweiter Anschluss
- 150: zumindest ein Kolben
- 153: Kraftübertragungseinrichtung
- 156: Wischerwelle
- 158: Versorgungsanschluss für Druckluftversorgung
- 160: Druckluftversorgung
- 172: erste Normalbetriebsanschlussleitung
- 174: erste Notbetriebsanschlussleitung
- 176: zweite Normalbetriebsanschlussleitung
- 178: zweite Notbetriebsanschlussleitung
- 180: Ventileinrichtung
- 190: Drehwinkelsensor
- 210: Abdeckung der Pneumatik
- 220: Zylinderrohr aus Strangpressprofil
- 230: Zylinderdeckel
- 240: Mittelmodul
- 250: Montageplatte
- 260: Hauptarmwelle
- 270: Parallelarmwelle
- 312: erstes Normalbetriebsventil
- 314: zweites Normalbetriebsventil
- 316: drittes Normalbetriebsventil
- 318: viertes Normalbetriebsventil
- 322: erstes Notbetriebsventil
- 324: zweites Notbetriebsventil
- 326: drittes Notbetriebsventil
- 328: viertes Notbetriebsventil
- 330: weiteres Notbetriebsventil
- 340: zusätzliches Magnetventil
- 345: Drossel
- 350: Schalldämpfer
- 510: Mittelmodul
- 520: Zahnsegment
- 530: Zahnstange
- 540: Endlagendämpfer
- 610: Kurbelstange
- 620: Pleuelstange
- 700: Verfahren zum Ansteuern einer Pneumatik
- 710: Schritt des Entscheidens
- 720: Schritt des Ansteuerns
- 730: Schritt des Betätigens
- 810: erste Phase
- 812: zweite Phase
- 814: dritte Phase
- 820: erster Graph
- 822: zweiter Graph
- 824: dritter Graph
- 910: Schritt des Betriebsmodus festlegen
- 920: Schritt des Stellungswinkels erfassen
- 930: Schritt des Filterns und Wandelns
- 940: Schritt der Fuzzifizierung
- 950: Schritt des Laufzeit Optimierens
- 960: Schritt der Defuzzifizierung
- 970: Schritt der Störungsverarbeitung
- 980: Schritt 980 der Aktivierung der Ventile

## Patentansprüche

1. Pneumatik (120) zum Betreiben eines Antriebs (110) für einen Scheibenwischer für ein Schienenfahrzeug, wobei der Antrieb (110) eine Kolbenführungseinrichtung (140) und eine Kraftübertragungseinrichtung (153) aufweist, wobei die Kolbenführungseinrichtung (140) einen ersten Anschluss (143) und einen dem ersten Anschluss (143) gegenüberliegenden zweiten Anschluss (146) und einen in der Kolbenführungseinrichtung (140) angeordneten Kolben (150) aufweist, der ausgebildet ist, einander entgegengesetzte Linearbewegungen entlang der Haupterstreckungsrichtung der Kolbenführungseinrichtung (140) auszuführen, und wobei die Kraftübertragungseinrichtung (153) zum Übertragen der einander entgegengesetzten Linearbewegungen des zumindest einen Kolben (150) auf eine Wischerwelle (156) ausgebildet ist, um eine alternierende Rotationsbewegung der Wischerwelle (156) zu bewirken, und wobei die Pneumatik (120) folgende Merkmale aufweist:
eine erste Normalbetriebsanschlussleitung (172) und eine hierzu parallele erste Notbetriebsanschlussleitung (174), die ausgebildet sind, um einen Versorgungsanschluss (158) für eine Druckluftversorgung (160) der Pneumatik (120) mit dem ersten Anschluss (143) des Antriebs (110) zu verbinden;
eine zweite Normalbetriebsanschlussleitung (176) und eine hierzu parallele zweite Notbetriebsanschlussleitung (178), die ausgebildet sind, um den Versorgungsanschluss (158) mit dem zweiten Anschluss (146) des Antriebs (110) zu verbinden; und
eine Ventileinrichtung (180) die ausgebildet ist, um in einem Normalbetrieb der Pneumatik (120) den Versorgungsanschluss (158) über die erste Normalbetriebsanschlussleitung (172) mit dem ersten Anschluss (143) und über die zweite Normalbetriebsanschlussleitung (176) mit dem zweiten Anschluss (146) zu koppeln, um die alternierende Rotationsbewegung der Wischerwelle (156) zu bewirken und ausgebildet ist, um in einem Notbetrieb der Pneumatik (120) den Versorgungsanschluss (158) über die erste Notbetriebsanschlussleitung (174) mit dem ersten Anschluss (143) und über die zweite Notbetriebsanschlussleitung (178) mit dem zweiten Anschluss (146) zu koppeln, um die alternierende Rotationsbewegung der Wischerwelle (156) zu bewirken.

2. Pneumatik (120) gemäß Anspruch 1, bei der die Ventileinrichtung (180) vier Normalbetriebsventile (312, 314, 316, 318), zumindest zwei Notbetriebsventile (322, 324, 326, 328) und zumindest ein weiteres Notbetriebsventil (330) aufweist, wobei ein erstes Normalbetriebsventil (312) und ein drittes Normalbetriebsventil (316) der vier Normalbetriebsventile (312, 314, 316, 318) und zumindest eines der zumindest zwei Notbetriebsventile (322, 324, 326, 328) der ersten Normalbetriebsanschlussleitung (172) zugeordnet und ein zweites Normalbetriebsventil (324) und ein viertes Normalbetriebsventil (328) und das zumindest eine weitere Notbetriebsventil (330) der zweiten Normalbetriebsanschlussleitung (176) zugeordnet sind, wobei das zumindest eine weitere Notbetriebsventil (330) der ersten Notbetriebsanschlussleitung (174) und der zweiten Notbetriebsanschlussleitung (178) zugeordnet ist.

3. Pneumatik (120) gemäß Anspruch 2, bei der das erste Normalbetriebsventil (312), das dritte Normalbetriebsventil (316) und das zumindest eine weitere Notbetriebsventil (330) parallel angeordnet und mit dem ersten Anschluss (143) verbindbar sind und bei der das zweite Normalbetriebsventil (314), das vierte Normalbetriebsventil (318) und das zumindest eine weitere Notbetriebsventil (330) parallel angeordnet und mit dem zweiten Anschluss (146) verbindbar sind, wobei das erste Normalbetriebsventil (312) mit einem ersten Notbetriebsventil (322) der zumindest zwei Notbetriebsventile (322, 324, 326, 328) verbunden ist, wobei das zweite Normalbetriebsventil (314) mit einem zweiten Notbetriebsventil (324) der zumindest zwei Notbetriebsventile (322, 324, 326, 328) verbunden ist, wobei das dritte Normalbetriebsventil (316) mit einem dritten Notbetriebsventil (326) der zumindest zwei Notbetriebsventile (322, 324, 326, 328) verbunden ist, wobei das vierte Normalbetriebsventil (318) mit einem vierten Notbetriebsventil (328) der zumindest zwei Notbetriebsventile (322, 324, 326, 328) verbunden ist, wobei das erste Notbetriebsventil (322), das zweite Notbetriebsventil (324) und das zumindest eine weitere Notbetriebsventil (330) mit dem Versorgungsanschluss (158) verbunden sind, wobei der erste Anschluss (143) über das dritte Normalbetriebsventil (316) und das dritte Notbetriebsventil (326) und/oder über das das zumindest eine weitere Notbetriebsventil (330) mit dem Versorgungsanschluss (158) für die Druckluftversorgung (160) verbindbar ist.

4. Pneumatik (120) gemäß einem der vorangegangenen Ansprüche, bei der dem Versorgungsanschluss (158) ein zusätzliches Magnetventil (340) nachgeschaltet ist, und wobei in Nullstellung des zusätzlichen Magnetventils (340) dem zusätzlichen Magnetventil (340) eine Drossel (345) nachgeschaltet ist.

5. Pneumatik (120) gemäß einem der Ansprüche 2 bis 4, bei der die vier Normalbetriebsventile (312, 314, 316, 318) als 3/2-Wegeventile ausgebildet sind und/oder die zumindest zwei Notbetriebsventile (322, 324, 326, 328) als 3/2-Wegeventile ausgebildet sind und/oder das weitere Notbetriebsventil (330) als ein 5/3-Wegeventil ausgebildet ist, wobei die zumindest zwei Notbetriebsventile (322, 324, 326, 328) so ausgebildet sind, dass in Nullstellung der Durchfluss frei ist, dass das erste Normalbetriebsventil (312) und das zweite Normalbetriebsventil (314) so ausgebildet sind, dass in Nullstellung der Zufluss gesperrt ist und dass das dritte Normalbetriebsventil (316) und vierte Normalbetriebsventil (318) so ausgebildet sind, dass in Nullstellung der Durchfluss frei ist und wobei das weitere Notbetriebsventil (330) eine Sperr-Nullstellung, eine Vorwärtsstellung und eine Rückwärtsstellung aufweist, wobei der Versorgungsanschluss (158) und/oder ein Abluftanschluss über die zumindest zwei Notbetriebsventile (322, 324, 326, 328) im aktivierten Zustand absperrbar ist.

6. Verfahren (700) zum Ansteuern einer Pneumatik (120) gemäß einem der Ansprüche 1 bis 5, wobei das Verfahren (700) die folgenden Schritte aufweist:
Entscheiden (710), ob die Pneumatik (120) in der Betriebsart des Normalbetriebs oder der Betriebsart des Notbetriebs betrieben wird;
Ansteuern (720) der Ventileinrichtung (180) der Pneumatik, sodass der Versorgungsanschluss (158) für die Druckluftversorgung (160) der Pneumatik (120) über die erste Normalbetriebsanschlussleitung (172) mit dem ersten Anschluss (143) und der zweite Anschluss (146) mit einem Luftausgang gekoppelt ist und alternierend hierzu, dass der Versorgungsanschluss (158) über die zweite Normalbetriebsanschlussleitung (176) mit dem zweiten Anschluss (146) und der erste Anschluss (143) mit einem Luftausgang gekoppelt ist, um die alternierende Rotationsbewegung der Wischerwelle (156) zu bewirken, wenn die Pneumatik (120) in der Betriebsart des Normalbetriebs betrieben wird; und
Betätigen (730) der Ventileinrichtung (180), sodass der Versorgungsanschluss (158) über die erste Notbetriebsanschlussleitung (174) mit dem ersten Anschluss (143) und der zweite Anschluss (146) mit einem Luftausgang gekoppelt ist und alternierend hierzu, dass der Versorgungsanschluss (158) über die zweite Notbetriebsanschlussleitung (178) mit dem zweiten Anschluss (146) und der erste Anschluss (143) mit einem Luftausgang gekoppelt ist, um die alternierende Rotationsbewegung der Wischerwelle zu bewirken, wenn die Pneumatik (120) in der Betriebsart des Notbetriebs betrieben wird.

7. Computer-Programmprodukt mit Programmcode zur Durchführung des Verfahrens nach Anspruch 6, wenn das Programmprodukt auf einer Vorrichtung zum Ansteuern einer Pneumatik ausgeführt wird.

8. Vorrichtung (130) zum Ansteuern der Pneumatik (120) gemäß einem der Ansprüche 1 bis 5, die Einrichtungen aufweist, die ausgebildet sind, ein Verfahren (700) zum Ansteuern der Pneumatik (120) für ein Schienenfahrzeug gemäß Anspruch 6 auszuführen.

9. Elektropneumatischer Scheibenwischerantrieb (100) für ein Schienenfahrzeug, der folgende Merkmale aufweist:
einen Antrieb (110) für einen Scheibenwischer für ein Schienenfahrzeug mit einer Kolbenführungseinrichtung (140) und einer Kraftübertragungseinrichtung (153), wobei die Kolbenführungseinrichtung (140) einen ersten Anschluss (143) und einen dem ersten Anschluss (143) gegenüberliegenden zweiten Anschluss (146) und zumindest einen in der Kolbenführungseinrichtung (140) angeordneten Kolben (150) umfasst, wobei der Kolben (150) ausgebildet ist, einander entgegengesetzte Linearbewegungen entlang der Haupterstreckungsrichtung der Kolbenführungseinrichtung (140) auszuführen, wobei die Kraftübertragungseinrichtung (153) zum Übertragen der einander entgegengesetzten Linearbewegungen des zumindest einen Kolben (150) auf eine Wischerwelle (156) ausgebildet ist, um eine alternierende Rotationsbewegung der Wischerwelle (156) zu bewirken; und
eine Pneumatik (120) gemäß einem der Ansprüche 1 bis 5 zum Betreiben des Antriebs (110).

10. Elektropneumatischer Scheibenwischerantrieb (100) gemäß Anspruch 9, bei dem die Kraftübertragungseinrichtung (153) als eine Pleuelstangen-Verbindung zwischen den zwei Kolben (150) ausgebildet ist, wobei ein erster der zwei Kolben (150) mittels einer Pleuelstange (620) mit einer Kurbelstange (610) und ein zweiter Kolben der zwei Kolben (150) mittels einer weiteren Pleuelstange (620) mit der Kurbelstange (610) verbunden sind, wobei die Kurbelstange (610) ausgebildet ist, die alternierende Rotationsbewegung der Wischerwelle (156) zu bewirken.

## Claims

1. Pneumatic system (120) for operating a drive (110) for a windscreen wiper for a rail vehicle, wherein the drive (110) has a piston guide device (140) and a power transmission device (153), wherein the piston guide device (140) has a first port (143) and a second port (146) situated opposite the first port (143) and has a piston (150) which is arranged in the piston guide device (140) and which is designed to perform mutually opposite linear movements along the main direction of extent of the piston guide device (140), and wherein the power transmission device (153) is designed to transmit the mutually opposite linear movements of the at least one piston (150) to a wiper shaft (156) in order to effect an alternating rotational movement of the wiper shaft (156), and wherein the pneumatic system (120) has the following features:
a first normal-operation connection line (172) and, parallel thereto, a first emergency-operation connection line (174) which are designed to connect a supply port (158) for a compressed-air supply (160) of the pneumatic system (120) to the first port (143) of the drive (110);
a second normal-operation connection line (176) and, parallel thereto, a second emergency-operation connection line (178) which are designed to connect the supply port (158) to the second port (146) of the drive (110); and
a valve device (180) which is designed such that, during normal operation of the pneumatic system (120), said valve device couples the supply port (158) to the first port (143) via the first normal-operation connection line (172) and to the second port (146) via the second normal-operation connection line (176) in order to effect the alternating rotational movement of the wiper shaft (156), and is designed such that, during emergency operation of the pneumatic system (120), said valve device couples the supply port (158) to the first port (143) via the first emergency-operation connection line (174) and to the second port (146) via the second emergency-operation connection line (178) in order to effect the alternating rotational movement of the wiper shaft (156).

2. Pneumatic system (120) according to claim 1, in which the valve device (180) has four normal-operation valves (312, 314, 316, 318), at least two emergency-operation valves (322, 324, 326, 328), and at least one further emergency-operation valve (330), wherein a first normal-operation valve (312) and a third normal-operation valve (316) of the four normal-operation valves (312, 314, 316, 318) and at least one of the at least two emergency-operation valves (322, 324, 326, 328) are assigned to the first normal-operation connection line (172), and a second normal-operation valve (324) and a fourth normal-operation valve (328) and the at least one further emergency-operation valve (330) are assigned to the second normal-operation connection line (176), wherein the at least one further emergency-operation valve (330) is assigned to the first emergency-operation connection line (174) and to the second emergency-operation connection line (178).

3. Pneumatic system (120) according to claim 1, in which the first normal-operation valve (312), the third normal-operation valve (316) and the at least one further emergency-operation valve (330) are arranged in parallel and are connectable to the first port (143) and in which the second normal-operation valve (314), the fourth normal-operation valve (318) and the at least one further emergency-operation valve (330) are arranged in parallel and are connectable to the second port (146), wherein the first normal-operation valve (312) is connected to a first emergency-operation valve (322) of the at least two emergency-operation valves (322, 324, 326, 328), wherein the second normal-operation valve (314) is connected to a second emergency-operation valve (324) of the at least two emergency-operation valves (322, 324, 326, 328), wherein the third normal-operation valve (316) is connected to a third emergency-operation valve (326) of the at least two emergency-operation valves (322, 324, 326, 328), wherein the fourth normal-operation valve (318) is connected to a fourth emergency-operation valve (328) of the at least two emergency-operation valves (322, 324, 326, 328), wherein the first emergency-operation valve (322), the second emergency-operation valve (324) and the at least one further emergency-operation valve (330) are connected to the supply port (158), wherein the first port (143) is connectable by way of the third normal-operation valve (316) and the third emergency-operation valve (326) and/or by way of the at least one further emergency-operation valve (330) to the supply port (158) for the compressed-air supply (160).

4. Pneumatic system (120) according to any of the preceding claims, in which an additional solenoid valve (340) is connected downstream of the supply port (158), and wherein, in the zero position of the additional solenoid valve (340), a throttle (345) is connected downstream of the additional solenoid valve (340).

5. Pneumatic system (120) according to any of claims 2 to 4, in which the four normal-operation valves (312, 314, 316, 318) are in the form of 3/2-wat valves and/or the at least two emergency-operation valves (322, 324, 326, 328) are in the form of 3/2-way valves and/or the further emergency-operation valve (330) is in the form of a 5/3-way valve, wherein the at least two emergency-operation valves (322, 324, 326, 328) are designed so as to exhibit free flow in the zero position, in that the first normal-operation valve (312) and the second normal-operation valve (314) are designed such that the inflow is blocked in the zero position, and in that the third normal-operation valve (316) and fourth normal-operation valve (318) are designed so as to exhibit free flow in the zero position, and wherein the further emergency-operation valve (330) has a blocking zero position, a forward position and a reverse position, wherein the supply port (158) and/or an exhaust air port can be shut off by way of the at least two emergency-operation valves (322, 324, 326, 328) in the activated state.

6. Method (700) for controlling a pneumatic system (120) as claimed in one of claims 1 to 5, wherein the method (700) has the following steps:
deciding (710) whether the pneumatic system (120) is operated in the mode of normal operation or in the mode of emergency operation;
controlling (720) the valve device (180) of the pneumatic system such that the supply port (158) for the compressed-air supply (160) of the pneumatic system (120) is coupled via the first normal-operation connection line (172) to the first port (143) and the second port (146) is coupled to an air outlet, and in alternation therewith, the supply port (158) is coupled via the second normal-operation connection line (176) to the second port (146) and the first port (143) is coupled to an air outlet, in order to effect the alternating rotational movement of the wiper shaft (156), when the pneumatic system (120) is operated in the mode of normal operation; and
actuating (730) the valve device (180) such that the supply port (158) is coupled via the first emergency-operation connection line (174) to the first port (143) and the second port (146) is coupled to an air outlet, and in alternation therewith, the supply port (158) is coupled via the second emergency-operation connection line (178) to the second port (146) and the first port (143) is coupled to an air outlet, in order to effect the alternating rotational movement of the wiper shaft, when the pneumatic system (120) is operated in the mode of emergency operation.

7. Computer programme product with programme code for carrying out the method according to claim 6 when the programme product is executed on an apparatus for controlling a pneumatic system.

8. Apparatus (130) for controlling the pneumatic system (120) according to any of claims 1 to 5, which apparatus has devices designed for executing a method (700) for controlling the pneumatic system (120) for a rail vehicle according to claim 6.

9. Electropneumatic windscreen wiper drive (100) for a rail vehicle, having the following features:
a drive (110) for a windscreen wiper for a rail vehicle having a piston guide device (140) and a power transmission device (153), wherein the piston guide device (140) has a first port (143) and a second port (146) situated opposite the first port (143) and has at least one piston (150) which is arranged in the piston guide device (140), wherein the piston (150) is designed to perform mutually opposite linear movements along the main direction of extent of the piston guide device (140), wherein the power transmission device (153) is designed to transmit the mutually opposite linear movements of the at least one piston (150) to a wiper shaft (156) in order to effect an alternating rotational movement of the wiper shaft (156); and
a pneumatic system (120) according to any of claims 1 to 5 for operating the drive (110).

10. Electropneumatic windscreen wiper drive (100) according to claim 9, in which the power transmission device (153) is designed as a piston rod link between the two pistons (150), wherein a first of the two pistons (150) is connected by means of a piston rod (620) to a connecting rod (610) and a second of the two pistons (150) is connected by means of a further piston rod (620) to the connecting rod (610), wherein the connecting rod (610) is designed to effect an alternating rotational movement of the wiper shaft (156).

## Revendications

1. Système (120) pneumatique pour faire fonctionner un entraînement (110) d'un essuie-glace d'un véhicule ferroviaire, dans lequel l'entraînement (110) a un dispositif (140) de guidage d'un piston et un dispositif (153) de transmission de force, le dispositif (140) de guidage d'un piston ayant un premier raccord (143) et un deuxième raccord (146) opposé au premier raccord (143) et un piston (150), disposé dans le dispositif (140) de guidage d'un piston et constitué de manière à effectuer des déplacements linéaires de sens contraire l'un à l'autre suivant la direction d'étendue principale du dispositif (140) de guidage d'un piston, et dans lequel le dispositif (153) de transmission de force est constitué pour transmettre à un arbre (156) d'essuie-glace les déplacements linéaires de sens contraire l'un à l'autre du au moins un piston (150), afin de provoquer un mouvement de rotation alterné de l'arbre (156) d'essuie-glace, le système (120) pneumatique ayant les caractéristiques suivantes :
un premier conduit (172) de raccordement de fonctionnement normal et un premier conduit (174), qui lui est parallèle, de raccordement de fonctionnement d'urgence, qui sont constitués pour mettre un raccord (158) d'alimentation, pour une alimentation (160) en air comprimé du système (120) pneumatique, en communication avec le premier raccord (143) de l'entraînement (110);
un deuxième conduit (176) de raccordement de fonctionnement normal et un deuxième conduit (178), qui lui est parallèle, de raccordement de fonctionnement d'urgence, qui sont constitués pour mettre le raccord (158) d'alimentation en communication avec le deuxième raccord (146) de l'entraînement (110) et
un dispositif (180) de soupape, qui est constitué pour relier, dans un fonctionnement normal du système (120) pneumatique, le raccord (158) d'alimentation, par l'intermédiaire du premier conduit (172) de raccordement en fonctionnement normal, avec le premier raccord (143) et, par l'intermédiaire du deuxième conduit (176) de raccordement de fonctionnement normal, avec le deuxième raccord (146), afin de provoquer le mouvement de rotation alterné de l'arbre (156) de l'essuie-glace et qui est constitué pour relier le premier conduit (174) de raccordement de fonctionnement d'urgence au premier raccord (143) et, par l'intermédiaire du deuxième conduit (178) de raccordement de fonctionnement d'urgence, au deuxième raccord (146), afin de provoquer le mouvement de rotation alterné de l'arbre (156) de l'essuie-glace.

2. Système (120) pneumatique suivant la revendication 1, dans lequel le dispositif (180) de soupape a quatre soupapes (312, 314, 316, 318) de fonctionnement normal, au moins deux soupapes (322, 324, 326, 328) de fonctionnement d'urgence et au moins une autre soupape (330) de fonctionnement d'urgence, une première soupape (312) de fonctionnement normal et une troisième soupape (316) de fonctionnement normal parmi les quatre soupapes (312, 314, 316, 318) de fonctionnement normal et au moins l'une des au moins deux soupapes (322, 324, 326, 328) de fonctionnement d'urgence étant associées au premier conduit (172) de raccordement de fonctionnement normal et une deuxième soupape (324) de fonctionnement normal et une quatrième soupape (328) de fonctionnement normal et la au moins une autre soupape (330) de fonctionnement d'urgence, étant associée au deuxième conduit (176) de raccordement de fonctionnement normal, la au moins une autre soupape (330) de fonctionnement d'urgence étant associée au premier conduit (174) de raccordement de fonctionnement d'urgence et au deuxième conduit (178) de raccordement de fonctionnement d'urgence.

3. Système (120) pneumatique suivant la revendication 2, dans lequel la première soupape (310) de fonctionnement normal, la troisième soupape (316) de fonctionnement normal et la au moins une autre soupape (330) de fonctionnement d'urgence sont montées en parallèle et peuvent être reliées au premier raccord (143) et dans lequel la deuxième soupape (314) de fonctionnement normal, la quatrième soupape (318) de fonctionnement normal et la au moins une autre soupape (330) de fonctionnement d'urgence sont disposées en parallèle et peuvent être reliées au deuxième raccord (146), la première soupape (312) de fonctionnement normal étant reliée à une première soupape (322) de fonctionnement d'urgence parmi les au moins deux soupapes (322, 324, 326, 328) de fonctionnement d'urgence, la deuxième soupape (314) de fonctionnement normal étant reliée à une deuxième soupape (324) de fonctionnement d'urgence parmi les au moins deux soupapes (322, 324, 326, 328) de fonctionnement d'urgence, la troisième soupape (316) de fonctionnement normal étant reliée à une troisième soupape (326) de fonctionnement d'urgence parmi les au moins deux soupapes (322, 324, 326, 328) de fonctionnement d'urgence, la quatrième soupape (318) de fonctionnement normal étant reliée à une quatrième soupape (328) de fonctionnement d'urgence parmi les au moins deux soupapes (322, 324, 326, 328) de fonctionnement d'urgence, la première soupape (322) de fonctionnement d'urgence, la deuxième soupape (324) de fonctionnement d'urgence et la au moins une autre soupape (330) de fonctionnement d'urgence étant reliées au raccord (158) d'alimentation, le premier raccord (143) pouvant, par l'intermédiaire de la troisième soupape (316) de fonctionnement normal et de la troisième soupape (326) de fonctionnement d'urgence et/ou par l'intermédiaire de la au moins une autre soupape (330) de fonctionnement d'urgence, être relié au raccord (158) d'alimentation pour l'alimentation (160) en air comprimé.

4. Système (120) pneumatique suivant l'une des revendications précédentes, dans lequel une électrovanne (340) supplémentaire est montée en aval du raccord (158) d'alimentation et dans lequel, dans la position de zéro de l'électrovanne (340) supplémentaire, un étranglement (345) est monté en aval de l'électrovanne (340) supplémentaire.

5. Système (120) pneumatique suivant l'une des revendications 2 à 4, dans lequel les quatre soupapes (312, 314, 316, 318) de fonctionnement normal sont constituées sous la forme de soupapes à 3/2 voies et/ou les au moins deux soupapes (322, 324, 326, 328) de fonctionnement normal sont constituées sous la forme de soupapes à 3/2 voies et/ou l'autre soupape (330) de fonctionnement normal est constituée sous la forme d'une soupape à 5/3 voies, les au moins deux soupapes (322, 324, 326, 328) de fonctionnement normal étant constituées de manière à ce que, en la position zéro, le passage soit libre, en ce que la première soupape (312) de fonctionnement normal et la deuxième soupape (314) de fonctionnement normal sont constituées de manière à ce que, en la position zéro, l'afflux soit bloqué et en ce que la troisième soupape (316) de fonctionnement normal et la quatrième soupape (318) de fonctionnement normal sont constituées de manière en ce que, en la position zéro, le passage soit libre et dans lequel l'autre soupape (330) de fonctionnement d'urgence a une position zéro de blocage, une position vers l'avant et une position vers l'arrière, le raccord (158) d'alimentation et/ou un raccord d'évacuation de l'air pouvant être bloqué dans l'état activé par les au moins deux soupapes (322, 324, 326, 328) de fonctionnement d'urgence.

6. Procédé (700) de commande d'un système (120) pneumatique suivant l'une des revendications 1 à 5, le procédé (700) ayant les stades suivants :
on décide (710) si le système (120) pneumatique fonctionne dans le type de fonctionnement du fonctionnement normal ou dans le type de fonctionnement du fonctionnement d'urgence;
on commande (720) le dispositif (180) de soupape du système pneumatique de manière à relier le raccord (158) d'alimentation pour l'alimentation (160) en air comprimé du système (120) pneumatique, par l'intermédiaire du premier conduit (172) de raccordement de fonctionnement normal, au premier raccord (143) et le deuxième raccord (146) à une sortie d'air et, en alternance à cela, à relier le raccord (158) d'alimentation, par l'intermédiaire du deuxième conduit (176) de raccordement de fonctionnement normal, au deuxième raccord (146) et le premier raccord (143) avec une sortie d'air, afin de provoquer un mouvement de rotation alterné de l'arbre (156) de l'essuie-glace si le système (120) pneumatique fonctionne dans le type de fonctionnement du fonctionnement normal et
on actionne (730) le dispositif (180) de soupape, de manière à relier le raccord (158) d'alimentation par l'intermédiaire du premier conduit (174) de raccordement de fonctionnement normal au premier raccord (143) et le deuxième raccord (146) à une sortie d'air et, en alternance à cela, de manière à relier le raccord (158) d'alimentation, par l'intermédiaire du deuxième conduit (178) de raccordement de fonctionnement d'urgence, au deuxième raccord (146) et le premier raccord (143) à une sortie d'air, afin de provoquer le mouvement de rotation en alternance de l'arbre de l'essuie-glace si le système (120) pneumatique fonctionne dans le type de fonctionnement du fonctionnement d'urgence.

7. Produit de programme d'ordinateur ayant des codes de programme pour effectuer le procédé suivant la revendication 6, lorsque le produit de programme est réalisé sur un dispositif de commande d'un système pneumatique.

8. Dispositif (130) de commande du système (120) pneumatique suivant l'une des revendications 1 à 5, qui a des dispositifs constitués pour effectuer un procédé (700) de commande du système (120) pneumatique d'un véhicule ferroviaire suivant la revendication 6.

9. Entraînement (100) électropneumatique d'un essuie-glace d'un véhicule ferroviaire, qui a les caractéristiques suivantes :
un entraînement (110) d'un essuie-glace d'un véhicule ferroviaire, comprenant un dispositif (140) de guidage d'un piston et un dispositif (153) de transmission de force, le dispositif (140) de guidage d'un piston comprenant un premier raccord (143) et un deuxième-raccord (146), opposé au premier raccord (143), et au moins un piston (150) disposé dans le dispositif (140) de guidage d'un piston, le piston (150) étant constitué pour effectuer des déplacements linéaires de sens opposé l'un à l'autre suivant la direction d'étendue principale du dispositif (140) de guidage d'un piston, le dispositif (153) de transmission de force étant constitué pour transmettre les déplacements linéaires de sens opposé l'un à l'autre du au moins un piston (150) à un arbre (156) d'essuie-glace, afin de provoquer un mouvement de rotation en alternance de l'arbre (156) d'essuie-glace et
un système (120) pneumatique suivant l'une des revendications 1 à 5, pour faire fonctionner l'entraînement (110).

10. Entraînement (110) électropneumatique d'essuie-glace suivant la revendication 9, dans lequel le dispositif (153) de transmission de force est constitué sous la forme d'une liaison par bielles entre les deux pistons (150), un premier des deux pistons (150) étant relié au moyen d'une bielle (610) motrice à une bielle (610) directrice et un deuxième piston des deux pistons (150) étant relié au moyen d'une autre bielle (620) motrice à la bielle (610) directrice, la bielle (610) directrice étant constituée pour provoquer le mouvement de rotation en alternance de l'arbre (156) de l'essuie-glace.
